# EUROPEAN PATENT APPLICATION

(11) **EP 4 171 121 A1**
(43) Date of publication of application: **26.04.2023**
(21) Application number: 21832781.5
(22) Date of filing: 29.06.2021
(51) Int. Cl.: H04W 36/00, H04W 36/30

(54) **COMMUNICATION PATH SWITCHING METHOD, APPARATUS, AND SYSTEM**

(30) Priority: 30.06.2020 CN 202010622576
(71) Applicant: Huawei Technologies Co., Ltd., Longgang District, Shenzhen, Guangdong 518129 (CN)
(72) Inventor: WANG, Nanxin, Shenzhen, Guangdong 518129 (CN); PENG, Wenjie, Shenzhen, Guangdong 518129 (CN); WANG, Jun, Shenzhen, Guangdong 518129 (CN); XU, Haibo, Shenzhen, Guangdong 518129 (CN)
(74) Representative: Epping - Hermann - Fischer
(86) International application number: PCT/CN2021/103293
(87) International publication number: WO 2022/002080

(57) **Abstract**

Embodiments of this application provide a communication path switching method, an apparatus, and a system. The method includes: A second terminal receives a first message sent by a first terminal, where the first message includes a first identifier corresponding to the first terminal. The second terminal determines, based on the first identifier, a third identifier, where the third identifier identifies the first terminal on a relay communication link that is based on the second terminal, and the third identifier is carried when the second terminal forwards a first RRC connection reconfiguration complete message that is sent by the first terminal to the second network device. According to the method in embodiments of this application, the second terminal determines, based on the third identifier, a specific first terminal corresponding to an RRC connection reconfiguration complete message that is forwarded, to ensure that the second network device correctly pairs a newly accessed first terminal and a context of a first terminal that is reserved in advance.

## Description

This application claims priority to Chinese Patent Application No. 202010622576.7, filed with the China National Intellectual Property Administration on June 30, 2020 and entitled "COMMUNICATION PATH SWITCHING METHOD, APPARATUS, AND SYSTEM", which is incorporated herein by reference in its entirety.

### TECHNICAL FIELD

Embodiments of this application relate to the field of communication technologies, and in particular, to a communication path switching method, an apparatus, and a system.

### BACKGROUND

In a mobile communication network, a terminal switches communication paths based on different communication requirements. With the diversification of communication requirements of the terminal, for example, with the continuous emergence of relay communication scenarios, higher requirements are imposed on accuracy of communication path switching and a low communication delay. How to ensure the accuracy of the communication path switching and the low communication delay is a problem to be resolved currently.

### SUMMARY

Embodiments of this application provide a communication path switching method, an apparatus, and a system, so as to ensure accuracy of communication path switching of a terminal and a low communication delay.

According to a first aspect, an embodiment of this application provides a communication method. The method may be performed by a second terminal, or may be performed by a component (for example, a processor, a chip, or a chip system) of the second terminal. For example, this embodiment of this application is described by using an example in which the method is performed by the second terminal. The method includes: The second terminal receives a first message sent by a first terminal, where the first message includes a first identifier, and the first identifier identifies the first terminal. The second terminal device determines a third identifier based on the first identifier, where the third identifier identifies the first terminal on a relay communication link that is based on the second terminal, and the second terminal is a target terminal for communication path switching of the first terminal. The second terminal forwards, based on the third identifier, a first radio resource control RRC connection reconfiguration complete message that is sent by the first terminal to a second network device, where the first RRC connection reconfiguration complete message indicates that the first terminal completes RRC connection reconfiguration.

Optionally, that the second terminal forwards, based on the third identifier, a first radio resource control RRC connection reconfiguration complete message that is sent by the first terminal to a second network device may be understood as: The third identifier is carried when the second terminal forwards the first RRC connection reconfiguration complete message that is sent by the first terminal to the second network device. Optionally, when receiving the first RRC connection reconfiguration complete message, the second terminal adds a packet header, where the packet header carries the third identifier, and forwards the packet header and the first RRC connection reconfiguration complete message to the second network device as a whole.

According to the method, the second terminal can identify the first terminal based on the first identifier reported by the first terminal, and determine a specific first terminal corresponding to an RRC connection reconfiguration complete message that is forwarded, to ensure that the second network device correctly pairs a newly accessed first terminal and a context of a first terminal that is reserved in advance.

In a possible implementation, the second terminal receives the first message sent by the first terminal, where the first message includes the third identifier, that is, the first identifier is directly the third identifier.

In another possible implementation, the second terminal allocates the third identifier based on the first identifier in the first message, and the second terminal sends second indication information to the second network device, where the second indication information includes an association relationship between the first identifier and the third identifier. In this implementation, if the first identifier reported by the first terminal is not the third identifier, the second terminal may allocate or generate the third identifier for the first terminal based on the first identifier, and notify the second network device of the association relationship between the first identifier and the third identifier, so as to help the second terminal and the second network device maintain the third identifier. It should be noted that when the first identifier is a radio resource control transaction identifier (radio resource control transaction identifier, rrc-TransactionIdentifier), the second terminal may allocate the third identifier based on a layer 2 identifier (layer 2 identifier, L2 ID) of the first terminal. A specific implementation process is as follows: The second terminal sends second indication information to the second network device, where the second indication information includes an association relationship between the L2 ID and the third identifier. In this implementation, the second terminal may allocate or generate the third identifier for the first terminal based on the L2 ID, and notify the second network device of the association relationship between the L2 ID and the third identifier. The second terminal sends the first identifier and the third identifier together to the second network device in the first RRC connection reconfiguration complete message, so that the second terminal and the second network device maintain the third identifier.

In another possible implementation, the second terminal sends the first identifier to the second network device; and the second terminal receives third indication information sent by the second network device, where the third indication information includes the association relationship between the first identifier and the third identifier. In this implementation, if the first identifier reported by the first terminal is not the third identifier, the second network device may allocate the third identifier. Specifically, the second terminal reports the first identifier to the second network device, and the second network device allocates the third identifier based on the first identifier, and sends the third identifier and the association relationship between the first identifier and the third identifier to the second terminal, so that the second terminal and the second network device maintain the third identifier. It should be noted that when the first identifier is rrc-Transactionldentifier, the second terminal may allocate the third identifier based on an L2 ID of the first terminal. A specific implementation process is as follows: The second terminal sends second indication information to the second network device, where the second indication information includes an association relationship between the L2 ID and the third identifier. In this implementation, the second terminal may allocate or generate the third identifier for the first terminal based on the L2 ID, and notify the second network device of the association relationship between the L2 ID and the third identifier. The second terminal sends the first identifier and the third identifier together to the second network device in the first RRC connection reconfiguration complete message, so that the second terminal and the second network device maintain the third identifier.

In another possible implementation, before the second terminal receives the first message sent by the first terminal, the second terminal receives a second message of the second network device, where the second message includes configuration information of a first bearer. The second terminal sets up the first bearer based on the second message. The first bearer includes a radio bearer for transmitting signaling and data of the first terminal between the second terminal and the first terminal, and a radio bearer for transmitting signaling and data of the first terminal between the second terminal and the second network device. In this implementation, the first bearer can be set up in advance, so that after receiving the first message sent by the first terminal, the second terminal can directly send the first RRC connection reconfiguration complete message to the second network device by using the first bearer. This reduces a relatively large communication delay or even communication interruption caused by bearer setup of the second terminal, and ensures a low communication delay.

In another possible implementation, the second message further includes the first identifier. In this implementation, the second message carries the first identifier, so that the second terminal can learn of an identifier of the first terminal in advance. After establishing a unicast connection to the first terminal and receiving the first message sent by the first terminal, the second terminal can determine that the accessed first terminal is a terminal that is indicated by the second network device previously to perform switching and whose context is reserved, so as to ensure that the second network device correctly pairs the newly accessed first terminal and the context of the first terminal that is reserved in advance. In another possible implementation, the second message further includes fourth indication information, and the fourth indication information indicates that the second terminal is the target terminal for communication path switching of the first terminal. The second terminal allocates the third identifier based on the fourth indication information. The second terminal device sends the third identifier to the second network device, where the first identifier in the first message is the third identifier. In this implementation, when the second network device indicates the second terminal to set up the first bearer, the second network device indicates that the second terminal is the target terminal for the communication path switching of the first terminal, and the second terminal may allocate, based on the fourth indication information, the third identifier corresponding to the first terminal, so as to help the second terminal and the second network device obtain and maintain the third identifier. Similarly, after the second terminal establishes the unicast connection to the first terminal and receives the first message sent by the first terminal, the second terminal can determine, by using the third identifier, that the accessed first terminal is a terminal that is indicated by the second network device previously to perform switching and whose context is reserved, so as to ensure that the second network device correctly pairs the newly accessed first terminal and the context of the first terminal that is reserved in advance. In another possible implementation, the second message includes only fourth indication information, and the fourth indication information indicates that the second terminal is the target terminal for communication path switching of the first terminal. The second terminal allocates the third identifier based on the fourth indication information. The second terminal device sends the third identifier to the second network device, where the first identifier in the first message is the third identifier. In this implementation, the second terminal may allocate, based on the fourth indication information, the third identifier corresponding to the first terminal, so as to help the second terminal and the second network device obtain and maintain the third identifier. Similarly, after the second terminal establishes the unicast connection to the first terminal and receives the first message sent by the first terminal, the second terminal can determine, by using the third identifier, that the accessed first terminal is a terminal that is indicated by the second network device previously to perform switching and whose context is reserved, so as to ensure that the second network device correctly pairs the newly accessed first terminal and the context of the first terminal that is reserved in advance. In another possible implementation, the third identifier is carried when the second terminal forwards the first RRC connection reconfiguration complete message by using the first bearer. In this implementation, the second terminal forwards the first RRC connection reconfiguration complete message based on the first bearer previously set up based on the second message, so that a relatively large communication delay or even communication interruption caused by bearer setup of the second terminal is reduced, and a low communication delay is ensured. In addition, the third identifier is carried when the second terminal forwards the first RRC connection reconfiguration complete message. This helps the second network device identify the first terminal corresponding to the RRC connection reconfiguration complete message, and correctly pair the first terminal with the context of the first terminal that is reserved in advance. In another possible implementation, the second terminal forwards the first RRC connection reconfiguration complete message by using a preconfigured second bearer, and the forwarded first RRC connection reconfiguration complete message carries the third identifier. In this implementation, if the second terminal has not set up a dedicated bearer for the first terminal before forwarding the first RRC connection reconfiguration complete message, the second terminal may forward the message by using a preconfigured second bearer. This can reduce a relatively large communication delay or even communication interruption caused by bearer setup of the second terminal, and ensure a low communication delay.

In another possible implementation, the second terminal sends a third bearer setup request message to the second network device, where the third bearer setup request message includes the third identifier and is for requesting to set up a third bearer; and the second terminal sends the first RRC connection reconfiguration complete message by using the third bearer. In this implementation, if the second terminal has not set up a dedicated bearer for the first terminal before forwarding the first RRC connection reconfiguration complete message, the second terminal may request the second network device to set up the third bearer to forward the message. This can ensure that the second terminal can correctly forward the first RRC connection reconfiguration complete message.

In another possible implementation, the first identifier is a local identifier (local identifier, local ID), a cell radio network temporary identifier (cell radio network temporary identifier, C-RNTI), a 5G temporary mobile subscriber identity (5G S-temporary mobile subscriber identity, 5G-S-TMSI), a radio resource control transaction identifier (radio resource control transaction identifier, rrc-Transactionldentifier), or a layer 2 identifier (layer 2 identifier, L2 ID) of the first terminal. In this implementation, the first identifier may be directly the third identifier, and is used by the second terminal to distinguish the first terminal on the relay link. Optionally, if the first identifier is not the third identifier, the second terminal may determine the third identifier based on the first identifier, so as to distinguish the first terminal on the relay link.

In another possible implementation, the third identifier is a local ID of the first terminal. In this implementation, when the third identifier is the local ID of the first terminal, the second terminal may distinguish, by using the third identifier, the first terminal on the relay communication link of the second terminal, and determine a specific first terminal corresponding to an RRC connection reconfiguration complete message that is forwarded, to ensure that the second network device correctly pairs a newly accessed first terminal and a context of a first terminal that is reserved in advance.

According to a second aspect, an embodiment of this application provides a communication method. The method may be performed by a first terminal, or may be performed by a component (for example, a processor, a chip, or a chip system) of a second terminal. For example, this embodiment of this application is described by using an example in which the method is performed by the first terminal. The method includes the following steps: A first terminal receives a first RRC connection reconfiguration message sent by a first network device, where the first RRC connection reconfiguration message includes a first identifier, a second identifier, and first indication information, the first identifier identifies the first terminal, the first indication information indicates the first terminal to perform communication path switching, the second identifier identifies the second terminal, and the second terminal is a target terminal for the communication path switching. The first terminal sends a first message to the second terminal, where the first message includes the first identifier. According to the method, the second terminal can identify the first terminal based on the first identifier reported by the first terminal, and subsequently determine a specific first terminal corresponding to an RRC connection reconfiguration complete message that is forwarded, to ensure that the second network device correctly pairs a newly accessed first terminal and a context of a first terminal that is reserved in advance.

In a possible implementation, the first terminal sends a first RRC connection reconfiguration complete message to the second network device by using the second terminal. In this implementation, the second terminal may forward the first RRC connection reconfiguration complete message to the second network device, to implement a process of accessing the second network device through a relay service of the second terminal.

In another possible implementation, before the first terminal receives the first RRC connection reconfiguration message sent by the first network device, the first terminal sends a sixth message to the first network device, where the sixth message includes at least one second candidate identifier, the second candidate identifier identifies a second candidate terminal, and the second candidate terminal is a candidate target terminal for the communication path switching of the first terminal. Optionally, the sixth message may further include a cell identifier corresponding to the at least one second candidate identifier, and measurement information of a relay communication link between the first terminal and the second candidate terminal. In this implementation, the first terminal may report an identifier of at least one candidate target switching terminal, a corresponding cell identifier, and link measurement information to the first network device, to help the first network device make a path switching decision.

In another possible implementation, the first identifier is a local ID, a C-RNTI, a 5G-S-TMSI, or rrc-TransactionIdentifier. In this implementation, the first identifier may be directly the third identifier, and is used by the second terminal to distinguish the first terminal on the relay link. Optionally, if the first identifier is not the third identifier, the second terminal may determine the third identifier based on the first identifier, so as to distinguish the first terminal on the relay link.

In another possible implementation, the first network device and the second network device are a same network device or different network devices. In this implementation, the first terminal and the second terminal may access a same network device, or may access different network devices.

According to a third aspect, an embodiment of this application provides a communication method. The method may be performed by a first network device, or may be performed by a component (for example, a processor, a chip, or a chip system) of the first network device. For example, this embodiment of this application is described by using an example in which the method is performed by the first network device. The method includes: The first network device receives a fifth message sent by a second network device, where the fifth message includes a first RRC connection reconfiguration message, the first RRC connection reconfiguration message includes a second identifier and first indication information, the first indication information indicates the first terminal to perform communication path switching, the second identifier identifies the second terminal, and the second terminal is a target terminal for the communication path switching. The first RRC connection reconfiguration message carries the first identifier, and the first identifier identifies the first terminal. The first network device sends the first RRC connection reconfiguration message to the first terminal. In this implementation, after receiving the switching indication of the second network device, the first network device sends the first RRC connection reconfiguration message to the first terminal device, to indicate the first terminal to perform path switching. With the first identifier carried, the first terminal may obtain the first identifier identifying the first terminal. Further, this helps the second terminal and the second network device subsequently maintain the first identifier.

In a possible implementation, the first network device receives a sixth message sent by the first terminal, where the sixth message includes at least one second candidate identifier, measurement information of a relay communication link between the first terminal and a second candidate terminal, the second candidate identifier identifies the second candidate terminal, and the second candidate terminal is a candidate target terminal for the communication path switching of the first terminal. Optionally, the sixth message may include a cell identifier corresponding to the at least one second candidate identifier

The first network device determines the second identifier from the at least one second candidate identifier. According to this implementation, the first terminal may report an identifier of a target switching terminal and corresponding link measurement information to the first network device. This helps the first network device make a path switching decision.

In another possible implementation, the first identifier is a local ID, a C-RNTI, a 5G-S-TMSI, or rrc-TransactionIdentifier. In this implementation, the first network device sends, to the first terminal, the first RRC connection reconfiguration message that carries the first identifier, where the first identifier is used by the first terminal to distinguish an identifier of the first terminal. The first identifier may be directly a third identifier, and is used by the second terminal to subsequently distinguish the first terminal on the relay link. Optionally, if the first identifier is not the third identifier, the second terminal may subsequently determine the third identifier based on the first identifier, so as to distinguish the first terminal on the relay link.

According to a fourth aspect, an embodiment of this application provides a communication method. The method may be performed by a second network device, or may be performed by a component (for example, a processor, a chip, or a chip system) of the second network device. For example, this embodiment of this application is described by using an example in which the method is performed by the second network device. The method includes: The second network device receives a fourth message sent by a first network device, where the fourth message includes a second identifier, the second identifier identifies a second terminal, the second terminal is a terminal within coverage of the second network device, and the fourth message is for requesting a first terminal to access the second network device through a relay service of the second terminal. The second network device sends a fifth message to the first network device, where the fifth message includes a first RRC connection reconfiguration message, the first RRC connection reconfiguration message includes the second identifier and first indication information, the first indication information indicates the first terminal to perform communication path switching, the second identifier identifies the second terminal, and the second terminal is a target terminal for the communication path switching. In this implementation, after receiving a path switching request of the first network device, the second network device sends a request reply message to the first network device, where the reply message includes a switching indication, a first identifier of the first terminal, and a second identifier of the target terminal for the switching, so that a process in which the first terminal accesses the second network device based on the communications service of the second terminal is further completed.

In a possible implementation, before the second network device sends the fifth message to the first network device, the second network device sends a second message to the second terminal, where the second message includes configuration information of a first bearer, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the second network device. In this implementation, the second terminal may set up a bearer related to a relay communication link before forwarding the first RRC connection reconfiguration complete message of the first terminal, that is, may set up the first bearer in advance, so that after receiving a first message sent by the first terminal, the second terminal can directly send the first RRC connection reconfiguration complete message to the second network device by using the first bearer. This reduces a relatively large communication delay or even communication interruption caused by bearer setup of the second terminal, and ensures a low communication delay.

In another possible implementation, the second message further includes the first identifier. In this implementation, the second message carries the first identifier, so that the second terminal can learn of an identifier of the first terminal in advance. After establishing a unicast connection to the first terminal and receiving the first message sent by the first terminal, the second terminal can determine that the accessed first terminal is a terminal that is indicated by the second network device previously to perform switching and whose context is reserved, so as to ensure that the second network device correctly pairs the newly accessed first terminal and the context of the first terminal that is reserved in advance. In another possible implementation, the second message further includes fourth indication information, and the fourth indication information indicates that the second terminal is the target terminal for the communication path switching of the first terminal. The second network device receives a third identifier sent by the second terminal device, where the third identifier is allocated by the second terminal based on the fourth indication information, and the first identifier in the fifth message is the third identifier. In this implementation, when the second network device indicates the second terminal to set up the first bearer, the second network device indicates that the second terminal is the target terminal for the communication path switching of the first terminal, and the second terminal may allocate, based on the fourth indication information, the third identifier corresponding to the first terminal, so as to help the second terminal and the second network device obtain and maintain the third identifier. Similarly, after the second terminal establishes the unicast connection to the first terminal and receives the first message sent by the first terminal, the second terminal can determine, by using the third identifier, that the accessed first terminal is a terminal that is indicated by the second network device previously to perform switching and whose context is reserved, so as to ensure that the second network device correctly pairs the newly accessed first terminal and the context of the first terminal that is reserved in advance.

In another possible implementation, the second message includes only the fourth indication information, that is, the first bearer is not set up in this implementation. The fourth indication information indicates that the second terminal is the target terminal for the communication path switching of the first terminal. The second network device receives the third identifier sent by the second terminal device, where the third identifier is allocated by the second terminal based on the fourth indication information, and the first identifier in the fifth message is the third identifier. In this implementation, the second terminal may allocate, based on the fourth indication information, the third identifier corresponding to the first terminal, so as to help the second terminal and the second network device obtain and maintain the third identifier. Similarly, after the second terminal establishes the unicast connection to the first terminal and receives the first message sent by the first terminal, the second terminal can determine, by using the third identifier, that the accessed first terminal is a terminal that is indicated by the second network device previously to perform switching and whose context is reserved, so as to ensure that the second network device correctly pairs the newly accessed first terminal and the context of the first terminal that is reserved in advance.

In another possible implementation, the second network device receives the first RRC connection reconfiguration complete message of the first terminal forwarded by the second terminal, and the forwarded first RRC connection reconfiguration complete message carries the third identifier. The third identifier identifies the first terminal on the relay communication link that is based on the second terminal, and has an association relationship with the first identifier.

Optionally, the first identifier is directly the third identifier. For example, the first identifier is directly a local ID of the first terminal.

Optionally, the first identifier has a correspondence or an association relationship with the third identifier. In other words, the third identifier may be determined based on the first identifier. For example, the first identifier is a C-RNTI, a 5G-S-TMSI, or rrc-Transactionldentifier corresponding to the first terminal. The third identifier is the local ID of the first terminal.

According to this implementation, the second network device may distinguish, based on the third identifier, a specific first terminal corresponding to an RRC connection reconfiguration complete message that is received, so that the second network can identify the third identifier to find the context of the first terminal that is previously maintained by using the first identifier.

In another possible implementation, for example, that the first identifier has an association relationship with the third identifier includes: The second network device receives the first identifier sent by the second terminal, and the second network device allocates the third identifier to the first terminal based on the first identifier, and sends the association relationship between the third identifier and the first identifier to the second terminal.

In another example, that the first identifier has an association relationship with the third identifier includes: The second terminal allocates the third identifier based on the first identifier, and sends the association relationship between the first identifier and the third identifier to the second network device.

In this implementation, before receiving the first RRC connection reconfiguration complete message, the second network device may determine the association relationship between the first identifier and the third identifier. This helps the second terminal and the second network device maintain the third identifier, so that the first network device can identify the third identifier to find the context of the first terminal that is previously maintained by using the first identifier.

In another example, when the first identifier is rrc-Transactionldentifier corresponding to the first terminal, that the first identifier has an association relationship with the third identifier includes: The second network device receives an L2 ID of the first terminal sent by the second terminal, and the second network device allocates the third identifier to the first terminal based on the L2 ID, and sends an association relationship between the third identifier and the L2 ID to the second terminal. Alternatively, the second terminal allocates the third identifier based on an L2 ID of the first terminal, and sends an association relationship between the L2 ID and the third identifier to the second network device.

In this implementation, when receiving the first RRC connection reconfiguration complete message, the second network device can identify both the first identifier and the third identifier. This helps the second terminal and the second network device maintain the third identifier, so that the first network device can identify the third identifier to find the context of the first terminal that is previously maintained by using the first identifier.

In another example, the second network device receives the first RRC connection reconfiguration complete message of the first terminal forwarded by the second terminal, and receives the third identifier carried in the first RRC connection reconfiguration complete message when the second terminal forwards the first RRC connection reconfiguration complete message, where the third identifier has an association relationship with the first identifier. The second network device sends a second RRC connection reconfiguration message to the second terminal, where the second RRC connection reconfiguration message carries the third identifier. In this implementation, after receiving the first RRC connection reconfiguration complete message, the second network device sends the second RRC connection reconfiguration message to the second terminal, to indicate the second terminal to perform RRC connection reconfiguration, for example, set up a bearer related to a relay communication link. In other words, the second terminal may alternatively set up a bearer related to a relay communication link after forwarding the first RRC connection reconfiguration complete message of the first terminal.

According to a fifth aspect, an embodiment of this application provides a communication method. The method may be performed by a first network device, or may be performed by a component (for example, a processor, a chip, or a chip system) of a third network device. For example, this embodiment of this application is described by using an example in which the method is performed by the first network device. The method includes: The first network device receives a sixth message sent by a first terminal, where the sixth message includes at least one second candidate identifier, the second candidate identifier identifies a second candidate terminal, and the second candidate terminal is a candidate target terminal for communication path switching of the first terminal. Optionally, the sixth message may further include a cell identifier corresponding to the at least one second candidate identifier, and measurement information of a relay communication link between the first terminal and the second candidate terminal. The first network device sends the first RRC connection reconfiguration message to a first terminal device, where the first RRC connection reconfiguration message includes a first identifier, a second identifier, and first indication information, the first indication information indicates the first terminal to perform communication path switching, the second identifier identifies a second terminal, the second terminal is a target terminal for path switching of the first terminal, and the first identifier identifies the first terminal. According to the method, the first network device allocates the first identifier to the first terminal, and the first terminal obtains the first identifier that can identify the first terminal. This helps the second terminal subsequently identify the first terminal by using the identifier.

In a possible implementation, the first network device determines the second identifier from the at least one second candidate identifier. In this implementation, the first network device determines, from the at least one candidate second terminal reported by the first terminal, a target terminal to which the first terminal switches the path.

In another possible implementation, the first network device receives the first RRC connection reconfiguration complete message that is from the first terminal and that is forwarded by the second terminal. The first network device determines, based on the first RRC connection reconfiguration complete message, that the first terminal completes RRC connection reconfiguration.

In another possible implementation, before the first network device receives the first RRC connection reconfiguration complete message, the first network device receives an association relationship between the first identifier and a third identifier, where the association relationship is sent by the second terminal device, and the third identifier identifies the first terminal on a relay link based on the second terminal; or
the first network device receives the first identifier sent by the second terminal; and
the first network device allocates the third identifier based on the first identifier, and the first network device sends an association relationship between the first identifier and a third identifier to the first terminal.

In this implementation, before forwarding the first RRC connection reconfiguration complete message, the second terminal determines the third identifier. This helps the second terminal and the first network device maintain the third identifier, so that the first network device can identify the third identifier to find the context of the first terminal that is previously maintained by using the first identifier.

In another possible implementation, when the first identifier is rrc-Transactionldentifier corresponding to the first terminal, a method for the first network device to determine an association relationship between the third identifier and the first identifier includes: The first network device receives an L2 ID of the first terminal sent by the second terminal, and the first network device allocates the third identifier to the first terminal based on the L2 ID, and sends an association relationship between the third identifier and the L2 ID to the second terminal. Alternatively, the second terminal allocates the third identifier based on an L2 ID of the first terminal, and sends an association relationship between the L2 ID and the third identifier to the first network device.

In this implementation, when receiving the first RRC connection reconfiguration complete message, the first network device can identify both the first identifier and the third identifier. This helps the second terminal and the first network device maintain the third identifier, so that the first network device can identify the third identifier to find the context of the first terminal that is previously maintained by using the first identifier.

In another possible implementation, before the first network device sends the first RRC connection reconfiguration message to the first terminal, the first network device sends a second message to a second terminal, where the second message includes configuration information of a first bearer, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the first network device.

In this implementation, the first bearer can be set up in advance, so that after receiving the first message sent by the first terminal, the second terminal can directly send the first RRC connection reconfiguration complete message to the first network device by using the first bearer. This reduces a relatively large communication delay or even communication interruption caused by bearer setup of the second terminal, and ensures a low communication delay. In another possible implementation, the second message further includes the first identifier. In this implementation, the second terminal can learn of an identifier of the first terminal in advance. After establishing a unicast connection to the first terminal and receiving the first message sent by the first terminal, the second terminal can determine that the accessed first terminal is a terminal that is indicated by the first network device previously to perform switching and whose context is reserved, so as to ensure that the first network device correctly pairs the newly accessed first terminal and the context of the first terminal that is reserved in advance.

In another possible implementation, the second message further includes fourth indication information, and the fourth indication information indicates that the second terminal is the target terminal for the communication path switching of the first terminal; and
the first network device receives the third identifier sent by the second terminal. In this implementation, the first bearer may be set up in advance, to reduce a relatively large communication delay or even communication interruption caused by bearer setup of the second terminal, and ensure a low communication delay. In addition, the second terminal determines that the second terminal is a target terminal for the communication path switching of the first terminal, and the second terminal and the first network device maintain the third identifier. Similarly, after the second terminal establishes a unicast connection to the first terminal and receives the first message sent by the first terminal, the second terminal can determine, by using the third identifier, that the accessed first terminal is a terminal and that is indicated by the first network device previously to perform switching and whose context is reserved, so as to ensure that the first network device correctly pairs the newly accessed first terminal and the context of the first terminal that is reserved in advance.

In another possible implementation, the second message includes only fourth indication information, and the fourth indication information indicates that the second terminal is the target terminal for the communication path switching of the first terminal. The second terminal allocates the third identifier based on the fourth indication information. The second terminal device sends the third identifier to the first network device, where the first identifier in the first message is the third identifier. In this implementation, the second terminal may allocate, based on the fourth indication information, the third identifier corresponding to the first terminal, so as to help the second terminal and the first network device obtain and maintain the third identifier. Similarly, after the second terminal establishes the unicast connection to the first terminal and receives the first message sent by the first terminal, the second terminal can determine, by using the third identifier, that the accessed first terminal is a terminal that is indicated by the first network device previously to perform switching and whose context is reserved, so as to ensure that the first network device correctly pairs the newly accessed first terminal and the context of the first terminal that is reserved in advance.

In another possible implementation, the first network device sends a second RRC connection reconfiguration message to the second terminal, where the second RRC connection reconfiguration message carries the third identifier. In this implementation, the second terminal sets up a bearer related to the relay link.

In another possible implementation, the first identifier is a local ID, a C-RNTI, a 5G-S-TMSI, or rrc-TransactionIdentifier, the second identifier is a C-RNTI, and the third identifier is a local ID.

According to a sixth aspect, an embodiment of this application provides a communication method. The method may be performed by a first terminal, or may be performed by a component (for example, a processor, a chip, or a chip system) of a second terminal. For example, this embodiment of this application is described by using an example in which the method is performed by the first terminal. The method includes: The first terminal sends a sixth message to a first network device, where the sixth message includes a first identifier and at least one second candidate identifier, the first identifier identifies the first terminal, the second candidate identifier identifies a second candidate terminal, and the second candidate terminal is a candidate target terminal for communication path switching of the first terminal. Optionally, the sixth message may further include a cell identifier corresponding to the at least one second candidate identifier, and measurement information of a relay communication link between the first terminal and the second candidate terminal. The first terminal receives a first RRC connection reconfiguration message sent by the first network device, where the first RRC connection reconfiguration message includes a second identifier and first indication information, the first indication information indicates the first terminal to perform the communication path switching, the second identifier identifies a second terminal, and the second terminal is a target terminal to which the first terminal switches the communication path. The first terminal sends the first RRC connection reconfiguration complete message to the second network device by using the second terminal. According to the method, the second terminal can identify the first terminal based on the first identifier reported by the first terminal, and determine a specific first terminal corresponding to an RRC connection reconfiguration complete message that is forwarded, to ensure that the second network device correctly pairs a newly accessed first terminal and a context of a first terminal that is reserved in advance.

In a possible implementation, the first identifier is an L2 ID of the first terminal. In this implementation, the first network device determines the first identifier, and reports the first identifier to the first network device, so as to ensure that the second terminal identifies a specific first terminal corresponding to an RRC connection reconfiguration complete message that is forwarded.

In another possible implementation, the first network device and the second network device are a same network device or different network devices. To be specific, before the communication path switching, the first network device corresponding to the first terminal and the second network device corresponding to the second terminal may be a same network device or may be different network devices.

According to a seventh aspect, an embodiment of this application provides a communication method. The method may be performed by a first network device, or may be performed by a component (for example, a processor, a chip, or a chip system) of the first network device. For example, this embodiment of this application is described by using an example in which the method is performed by the first network device. The method includes: The first network device receives a sixth message sent by the first terminal, where the sixth message includes a first identifier and at least one second candidate identifier, the first identifier identifies the first terminal, the second candidate identifier identifies a second candidate terminal, and the second candidate terminal is a candidate target terminal for communication path switching of the first terminal. Optionally, the sixth message may further include a cell identifier corresponding to the at least one second candidate identifier, and measurement information of a relay communication link between the first terminal and the second candidate terminal. The first network device sends a fourth message to the second network device, where the fourth message includes the first identifier and a second identifier, the second identifier identifies a second terminal, and the second terminal is a target terminal for the communication path switching of the first terminal.

According to the method, the first network device reports a switching request to the second network device, where the switching request carries the first identifier. This helps the first terminal access the second network device based on a relay service of the second terminal.

In a possible implementation, the first network device determines the second identifier from the at least one second candidate identifier. In this implementation, the first network device determines, from the at least one candidate second terminal reported by the first terminal, a target terminal to which the first terminal switches the path.

In a possible implementation, the first identifier is an L2 ID of the first terminal. In this implementation, the first terminal determines the first identifier, and reports the first identifier to the first network device, so as to ensure that the second terminal identifies a specific first terminal corresponding to an RRC connection reconfiguration complete message that is forwarded.

According to an eighth aspect, an embodiment of this application provides a communication method. The method may be performed by a second network device, or may be performed by a component (for example, a processor, a chip, or a chip system) of the second network device. For example, this embodiment of this application is described by using an example in which the method is performed by the second network device. The method includes: The second network device receives a fourth message sent by a first network device, where the fourth message includes a first identifier and a second identifier, the first identifier identifies the first terminal, the second identifier identifies a second terminal, and the second terminal is a target terminal for communication path switching of the first terminal. The second network device sends a fifth message to the first network device, where the fifth message includes a first RRC connection reconfiguration message, the first RRC connection reconfiguration message includes the second identifier and first indication information, the first indication information indicates the first terminal to perform the communication path switching, the second identifier identifies the second terminal, and the second terminal is a target terminal for the communication path switching. According to the method, the second network device receives the first identifier of the first terminal and the second identifier of the target terminal to which the path is to be switched that are reported by the first network device, and determines to indicate the first terminal to switch the path. The first identifier helps the second network device maintain a context of the first terminal, so that when the first terminal accesses the second network device by using the second terminal, the second network device can identify and match, by using the first identifier, the context maintained in advance. In this way, a process in which the first terminal accesses the second network device based on a communications service of the second terminal is further completed. In a possible implementation, after the second network device sends a fifth message to the first network device, the second network device receives the first RRC connection reconfiguration complete message of the first terminal forwarded by the second terminal. In this implementation, the second network device determines, based on the first RRC connection reconfiguration complete message, that the first terminal completes RRC connection reconfiguration. In another possible implementation, the second network device receives the first RRC connection reconfiguration complete message of the first terminal forwarded by the second terminal, and receives a third identifier carried in the first RRC connection reconfiguration complete message forwarded by the second terminal. The third identifier identifies the first terminal on the relay communication link that is based on the second terminal, and has an association relationship with the first identifier.

Optionally, the first identifier has a correspondence or an association relationship with the third identifier. In other words, the third identifier may be determined based on the first identifier. For example, the first identifier is an L2 ID corresponding to the first terminal. The third identifier is a local ID of the first terminal.

In this implementation, the second network device may distinguish, based on the third identifier, a specific first terminal corresponding to the RRC connection reconfiguration complete message that is received.

In another possible implementation, the second network device determines that there is an association relationship between the third identifier and the first identifier before receiving the first RRC connection reconfiguration complete message. For example, that there is an association relationship between the third identifier and the first identifier includes: The second network device receives the first identifier sent by the second terminal; and the second network device allocates the third identifier to the first terminal based on the first identifier, and sends the association relationship between the third identifier and the first identifier to the second terminal.

In another example, the second network device determines that there is an association relationship between the third identifier and the first identifier before receiving the first RRC connection reconfiguration complete message. The association relationship between the third identifier and the first identifier includes: The second terminal allocates the third identifier based on the first identifier, and sending the association relationship between the first identifier and the third identifier to the second network device.

In this implementation, before receiving the first RRC connection reconfiguration complete message, the second network device may determine the association relationship between the first identifier and the third identifier. This helps the second terminal and the second network device maintain the third identifier.

In a possible implementation, before the second network device sends the fifth message to the first network device, the second network device sends the second message to the second terminal, where the second message includes configuration information of a first bearer and a first identifier, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the second network device. In this implementation, the second terminal may set up a bearer related to the relay communication link before forwarding the first RRC connection reconfiguration complete message of the first terminal, that is, may set up the first bearer in advance. This reduces a relatively large communication delay or even communication interruption caused by bearer setup of the second terminal, and ensures a low communication delay. In addition, the second message further includes the first identifier. In this implementation, the second message carries the first identifier. This helps the second terminal determine a specific first terminal to be accessed.

In a possible implementation, after receiving the first RRC connection reconfiguration complete message of the first terminal forwarded by the second terminal, the second network device receives a third identifier carried by the second terminal when the second terminal forwards the first RRC connection reconfiguration complete message, and the second network device sends a second RRC connection reconfiguration message to the second terminal, where the second RRC connection reconfiguration message carries the third identifier. In this implementation, after receiving the first RRC connection reconfiguration complete message, the second network device sends the second RRC connection reconfiguration message to the second terminal, to indicate the second terminal to perform RRC connection reconfiguration, for example, set up a bearer related to a relay communication link. In other words, the second terminal may alternatively set up a bearer related to a relay communication link after forwarding the first RRC connection reconfiguration complete message of the first terminal.

In a possible implementation, the first identifier is an L2 ID of the first terminal, and the third identifier is a local ID of the first terminal.

According to a ninth aspect, an embodiment of this application provides a communication method. The method may be performed by a first network device, or may be performed by a component (for example, a processor, a chip, or a chip system) of the first network device. For example, this embodiment of this application is described by using an example in which the method is performed by the first network device. The method includes: The first network device receives a sixth message sent by the first terminal, where the sixth message includes a first identifier and at least one second candidate identifier, the second candidate identifier identifies a second candidate terminal, and the second candidate terminal is a candidate target terminal for communication path switching of the first terminal. Optionally, the sixth message may further include a cell identifier corresponding to the at least one second candidate identifier, and measurement information of a relay communication link between the first terminal and the second candidate terminal.

The first network device sends a first RRC connection reconfiguration message to the first terminal, where the first RRC connection reconfiguration message includes a second identifier and first indication information, the first indication information indicates the first terminal to perform communication path switching, the second identifier identifies a second terminal, and the second terminal is a target terminal to which the first terminal switches the communication path.

According to the method, the first network device receives the first identifier reported by the first terminal, and indicates the first terminal device to switch to the first network device based on a relay service of the second terminal. In a possible implementation, the first network device compares a value relationship between channel reference signal received power (reference signal received power, RSRP) of a direct link, sidelink RSRP, and a preset RSRP threshold to determine the second identifier. In this implementation, the first network device determines, from the at least one candidate second terminal reported by the first terminal, a target terminal to which the first terminal switches the path. In a possible implementation, the first network device receives a first RRC connection reconfiguration complete message that is from the first terminal and that is forwarded by the second terminal. The first network device determines, based on the first RRC connection reconfiguration complete message, that the first terminal completes RRC connection reconfiguration.

In a possible implementation, before the first network device receives the first RRC connection reconfiguration complete message,
the first network device receives an association relationship between the first identifier and a third identifier, where the association relationship is sent by the second terminal device, and the third identifier identifies the first terminal on a relay link based on the second terminal; or
the first network device receives the first identifier sent by the second terminal; and
the first network device allocates the third identifier based on the first identifier, and the first network device sends an association relationship between the first identifier and a third identifier to the first terminal.

In this implementation, before forwarding the first RRC connection reconfiguration complete message, the second terminal determines the third identifier. This helps the second terminal and the first network device maintain the third identifier, so that the first network device can identify the third identifier to find the context of the first terminal that is previously maintained by using the first identifier.

In a possible implementation, before the first network device sends the first RRC connection reconfiguration message to the first terminal, the first network device sends a second message to a second terminal, where the second message includes configuration information of a first bearer and the first identifier, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the first network device. In this implementation, the first bearer may be set up in advance based on the configuration information of the first bearer, to reduce a relatively large communication delay or even communication interruption caused by bearer setup of the second terminal, and ensure a low communication delay. Based on the first identifier in the second message, the second terminal learns of the identifier of the first terminal in advance. After establishing a unicast connection to the first terminal and receiving the first message sent by the first terminal, the second terminal can determine that the accessed first terminal is a terminal that is indicated by the first network device previously to perform switching and whose context is reserved, so as to ensure that the first network device correctly pairs the newly accessed first terminal and the context of the first terminal that is reserved in advance.

In a possible implementation, the first network device sends a second RRC connection reconfiguration message to the second terminal, where the second RRC connection reconfiguration message carries the third identifier. In this implementation, the second terminal sets up a bearer related to the relay link.

In a possible implementation, the first identifier is an L2 ID, the second identifier is a C-RNTI, and the third identifier is a local ID. In this implementation, the first terminal determines the first identifier, and reports the first identifier to the first network device, so as to ensure that the second terminal identifies a specific first terminal corresponding to an RRC connection reconfiguration complete message that is forwarded.

According to a tenth aspect, an embodiment of this application provides a communication apparatus. The apparatus may be a first terminal, or may be a component (a processor, a chip, or a chip system) of the first terminal. The apparatus has a function of implementing the second aspect or the sixth aspect, or the possible implementations of the second aspect or the sixth aspect. The function may be implemented by using hardware, or may be implemented by hardware by executing corresponding software. The hardware or the software includes one or more modules corresponding to the function.

According to an eleventh aspect, an embodiment of this application provides a communication apparatus. The apparatus may be a second terminal, or may be a component (a processor, a chip, or a chip system) used by the second terminal. The apparatus has a function of implementing the first aspect or the possible implementation methods of the first aspect. The function may be implemented by using hardware, or may be implemented by hardware by executing corresponding software. The hardware or the software includes one or more modules corresponding to the function. According to a twelfth aspect, an embodiment of this application provides a communication apparatus. The apparatus may be a first network device, or may be a component (a processor, a chip, or a chip system) used by the first network device. The apparatus has a function of implementing the third aspect, the fifth aspect, the seventh aspect, or the ninth aspect, or the possible implementations corresponding to the foregoing aspects. The function may be implemented by using hardware, or may be implemented by hardware by executing corresponding software. The hardware or the software includes one or more modules corresponding to the function.

According to a thirteenth aspect, an embodiment of this application provides a communication apparatus. The apparatus may be a second network device, or may be a component (a processor, a chip, or a chip system) used by the second network device. The apparatus has a function of implementing the fourth aspect and the eighth aspect, or the possible implementations corresponding to the foregoing aspects. The function may be implemented by using hardware, or may be implemented by hardware by executing corresponding software. The hardware or the software includes one or more modules corresponding to the function.

According to a fourteenth aspect, an embodiment of this application provides a communication apparatus, including a processor and a memory. The memory is configured to store computer-executable instructions, and when the apparatus runs, the processor executes the computer-executable instructions stored in the memory, to enable the apparatus to perform the method in the first aspect, the second aspect, or the sixth aspect, or any method in the possible implementations of the first aspect, the second aspect, or the sixth aspect.

According to a fifteenth aspect, an embodiment of this application provides a communication apparatus, including a processor and a memory. The memory is configured to store computer-executable instructions, and when the apparatus runs, the processor executes the computer-executable instructions stored in the memory, to enable the apparatus to perform the methods in the third to fifth aspects or the seventh to ninth aspects, or the possible implementations of the third to fifth aspects or the seventh to ninth aspects.

According to a sixteenth aspect, an embodiment of this application provides a communication apparatus, including units or means (means) configured to perform the operations in the methods in the first aspect to the third aspect or the possible implementations of the first aspect to the ninth aspect.

According to a seventeenth aspect, an embodiment of this application provides a communication apparatus, including a processor and an interface circuit. The processor is configured to: communicate with another apparatus by using the interface circuit, and perform the method in the first aspect, the second aspect, or the sixth aspect, or any method in the possible implementations of the first aspect, the second aspect, or the sixth aspect. There are one or more processors. According to an eighteenth aspect, an embodiment of this application provides a communication apparatus, including a processor and an interface circuit. The processor is configured to: communicate with another apparatus by using the interface circuit, and perform the method in the third to the fifth aspects or the seventh to the ninth aspects, or the possible implementations of the third to the fifth aspects or the seventh to the ninth aspects. There are one or more processors.

According to a nineteenth aspect, an embodiment of this application provides a communication apparatus, including a processor, configured to: connect to a memory, and invoke a program stored in the memory, to perform the method in the first aspect, the second aspect, or the sixth aspect, or any method in the possible implementations of the first aspect, the second aspect, or the sixth aspect. The memory may be located inside or outside the apparatus. In addition, there are one or more processors.

According to a twentieth aspect, an embodiment of this application further provides a computer-readable storage medium. The computer-readable storage medium stores instructions, and when the instructions are run on a computer, a processor is enabled to perform the method in the third to the fifth aspects or the seventh to the ninth aspects, or any method in the possible implementations of the third to the fifth aspects or the seventh to the ninth aspects. According to a twenty-first aspect, an embodiment of this application further provides a computer program product. The computer product includes a computer program, and when the computer program is run, the method in the first aspect, the second aspect, or the sixth aspect, or any method in the possible implementations of the first aspect, the second aspect, or the sixth aspect is performed.

According to a twenty-second aspect, an embodiment of this application further provides a computer program product. The computer product includes a computer program, and when the computer program is run, the method in the third to the fifth aspects or the seventh to the ninth aspects, or any method in the possible implementations of the third to the fifth aspects or the seventh to the ninth aspects is performed.

According to a twenty-third aspect, an embodiment of this application further provides a chip system, including a processor, configured to perform the method according to the first aspect, the second aspect, or the sixth aspect, or any method of the possible implementations of the first aspect, the second aspect, or the sixth aspect.

According to a twenty-fourth aspect, an embodiment of this application further provides a chip system, including a processor, configured to perform the method in the methods in the third to the fifth aspects or the seventh to the ninth aspects, or any method of the possible implementations of the third to the fifth aspects or the seventh to the ninth aspects.

According to a twenty-fifth aspect, an embodiment of this application further provides a communication system, including the communication apparatus according to the tenth aspect, the eleventh aspect, and the twelfth aspect. According to a twenty-sixth aspect, an embodiment of this application further provides a communication system, including the communication apparatuses according to the tenth aspect, the eleventh aspect, the twelfth aspect, and the thirteenth aspect.

### BRIEF DESCRIPTION OF DRAWINGS

FIG. 1A is a schematic diagram of a network architecture to which an embodiment of this application is applicable;
FIG. 1B is a schematic diagram of a network architecture to which an embodiment of this application is applicable;
FIG. 2 is a schematic flowchart of switching from direct communication to indirect communication;
FIG. 3 is a schematic diagram of a communication method according to an embodiment of this application;
FIG. 4 is a schematic diagram of another communication method according to an embodiment of this application;
FIG. 5 is a schematic diagram of another communication method according to an embodiment of this application;
FIG. 6 is a schematic diagram of another communication method according to an embodiment of this application;
FIG. 7 is a schematic diagram of another communication method according to an embodiment of this application;
FIG. 8 is a schematic diagram of another communication method according to an embodiment of this application;
FIG. 9 is a schematic diagram of a communication apparatus according to an embodiment of this application;
FIG. 10 is a schematic diagram of a communication apparatus according to an embodiment of this application; and
FIG. 11 is a schematic diagram of a terminal according to an embodiment of this application.

### DESCRIPTION OF EMBODIMENTS

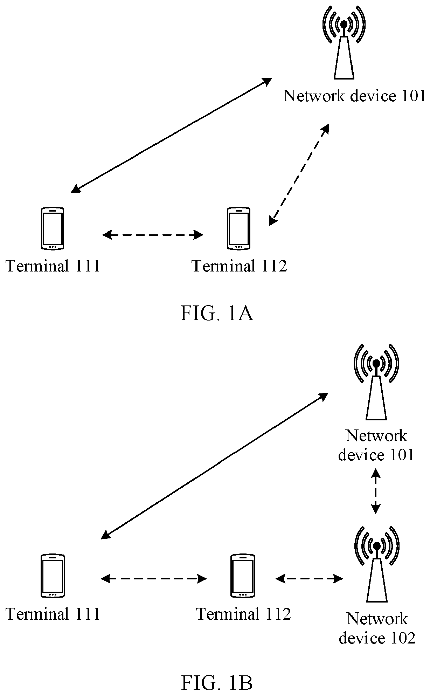

FIG. 1A is a schematic diagram of a communication system 100 to which an embodiment of this application is applicable. The communication system 100 includes at least two terminals 111 and 112 and at least one network device 101. Optionally, the terminal 111 may communicate with the network device 101 through a radio interface (for example, a Uu interface). The terminal 111 and the terminal 112 may perform direct communication, for example, may communicate with each other through a PCS interface between the terminals. A link between the terminals may be referred to as a sidelink, a PCS interface link, or an inter-terminal link. In a possible manner, the terminal 111 switches from performing direct communication with the network device 101 to performing communication with the network device 101 by using the terminal 112. In another possible manner, as shown in FIG. 1B, the communication system 100 further includes a network device 102. The terminal 112 communicates with the network device 102, and the network device 101 may interact with the network device 102. The terminal 111 switches from performing direct communication with the network device 101 to performing communication with the network device 102 by using the terminal 112.

The terminal (terminal) is a device having a wireless transceiver function. The terminal may be deployed on land, and includes an indoor device, an outdoor device, a handheld device, or a vehicle-mounted device; or may be deployed on a water surface (for example, on a ship); or may be deployed in the air (for example, on an airplane, a balloon, or a satellite). The terminal may be user equipment (user equipment), a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in remote medical (remote medical), a wireless terminal in a smart grid (smart grid), a wireless terminal in transportation safety (transportation safety), a wireless terminal in a smart city (smart city), a wireless terminal or user equipment (user equipment, UE) in a smart home (smart home), or the like. In embodiments of this application, direct communication is supported between terminals, and direct communication between terminals may also be referred to as sidelink (sidelink) communication or device-to-device (device-to-device) communication.

The network device is a device that provides a wireless communication function for a terminal. The network device includes but is not limited to a next generation NodeB (gNodeB, gNB) in fifth generation (5th generation, 5G), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseBand unit, BBU), a transmission reception point (transmitting and receiving point, TRP), a transmission point (transmitting point, TP), or a mobile switching center.

When 5G is independently deployed, a logical system of the network device can use a mode in which a central unit (central unit, CU) is separated from a distributed unit (distributed unit, DU). Based on configuration of protocol stack functions, a CU-DU logical system may be classified into two types: a CU-DU split architecture and a CU-DU integrated architecture. For a CU-DU split architecture, the protocol stack functions may be dynamically configured and split. Some functions are implemented in a CU, and remaining functions are implemented in a DU. To meet requirements of different split options, ideal and non-ideal transmission networks need to be supported. An interface between the CU and the DU should comply with a 3rd generation partnership project (3rd generation partnership project, 3GPP) specification requirement. For a CU-DU integrated architecture, logical functions of a CU and a DU are integrated into a same network device, to implement all functions of a protocol stack.

For ease of understanding, terms used in embodiments of this application are briefly described.

Source base station: The source base station is a network device connected to a core network. The network device currently provides a communication service for a remote terminal. In other words, the source base station is a base station on which the remote terminal camps. Optionally, in embodiments of this application, the source base station may also be referred to as a first network device.

Target base station: The target base station is a network device connected to a core network. The network device currently provides a communication service for a relay terminal. In other words, the target base station is a base station on which the relay terminal camps. Optionally, in embodiments of this application, the target base station may also be referred to as a second network device.

Relay terminal (relay UE): The relay terminal is a terminal having a relay service function. Another terminal may communicate with the network device by using the relay terminal. Optionally, in embodiments of this application, the relay terminal may also be referred to as a second terminal.

Remote terminal (remote UE): The remote terminal is a terminal that receives a relay service. The remote terminal communicates with a network device by using a relay terminal, and there is a sidelink connection between the remote terminal and the relay terminal. Optionally, in embodiments of this application, the remote terminal may also be referred to as a first terminal.

Direct communication: A terminal directly communicates with a network device.

Relay terminal-based communication: A remote terminal communicates with a network device by using a relay terminal.

Communication path switching: When a communication environment of a terminal changes, the terminal switches a communication path, so as to implement communication by using a new communication path. The communication path switching may also be referred to as communication link switching.

In a mobile communication system, a terminal switches communication paths based on different communication requirements. In a conventional communication path switching procedure, mobility management of a connected terminal is controlled by a network device. To be specific, the network device sends a switching message to indicate a cell to which the terminal switches and indicate how to perform switching. With the diversification of communication requirements of the terminal, for example, with the emergence of relay communication scenarios, more scenarios are introduced in a communication path switching process, including a scenario in which remote terminals (remote UE) shown in FIG. 1A and FIG. 1B are switched from direct communication to relay terminal (relay UE)-based communication. Therefore, the communication path switching procedure needs to be designed for complex communication requirements of the terminals, to ensure accuracy of communication path switching and a low communication delay.

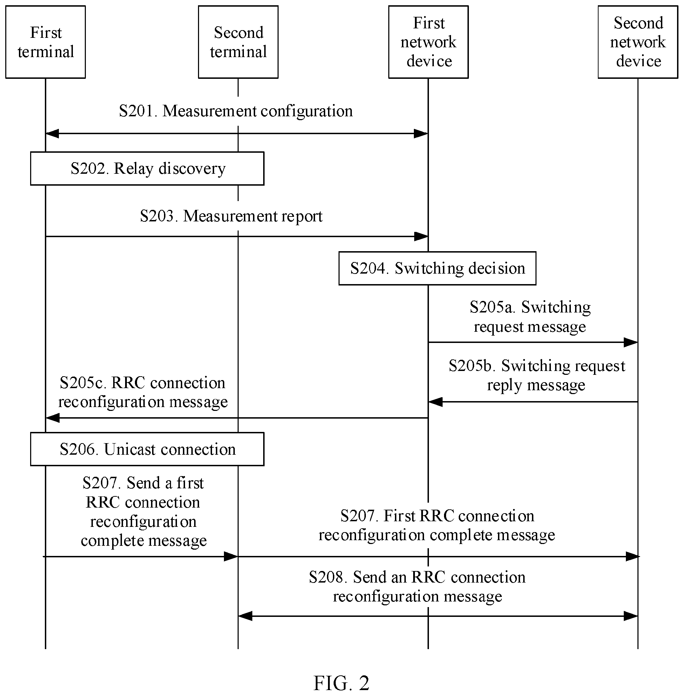

FIG. 2 is a schematic flowchart of switching from direct to indirect (direct to indirect) communication in a layer 2 relay (L2 relay) architecture. The following operations are included.

S201: A source base station sends measurement configuration information to remote UE.

The measurement configuration information is used by the remote UE for measurement.

S202: The remote UE performs a relay discovery process. After the remote UE meets a trigger condition of a relay UE discovery (Relay Discovery) process, the remote UE performs the relay discovery process to discover surrounding relay UE through the discovery process, obtain a cell radio network temporary identifier (cell radio network temporary identifier, C-RNTI) of the relay UE and a serving cell identifier (Cell ID) corresponding to the relay UE, and obtain quality information of a channel between the remote UE and the relay UE through measurement.

S203: The remote UE sends a measurement report to the source base station, where the measurement report carries measurement information of a relay communication link between the remote UE and the relay UE, and the measurement information includes the C-RNTI of the relay UE, the cell identifier of the relay UE, and the quality information of the channel between the remote UE and the relay UE.

S204: The source base station determines, based on the measurement report, to switch a communication link of the remote UE to a relay communication link passing through target relay UE.

After receiving the measurement report, the source base station determines the target relay UE according to a specific rule, where the target relay UE is a target relay terminal to which the remote UE is to establish a connection.

S205a: The source base station identifies a serving cell identifier of the relay UE in the measurement report, and sends a switching request message to a target base station, where the message carries the C-RNTI of the relay UE.

S205b: The target base station identifies the relay UE, and sends a switching request reply message to the source base station, where the message carries indication information for communication path switching of the remote UE, configuration information of a radio bearer for communication between the remote UE and the relay UE, and configuration information of a PDCP layer for communication between the remote UE and the target base station. S205c: The source base station sends an RRC connection reconfiguration message to the remote UE, where the message carries information in the switching request reply message.

S206: The remote UE establishes a unicast connection to the relay UE, and sets up a radio bearer based on content in the RRC connection reconfiguration message.

S207: The remote UE replies with an RRC connection reconfiguration complete message through forwarding performed by the relay UE.

S208: After receiving the RRC connection reconfiguration complete message replied by the remote UE, the target base station sends the RRC connection reconfiguration message to the relay UE, to set up a radio bearer for transmitting signaling and data of the remote UE between the relay UE and the remote UE, and set up a radio bearer for transmitting data and signaling of the remote UE between the relay UE and the target base station.

According to the foregoing process, the remote UE is switched from direct communication to relay terminal (relay UE)-based communication, and a communication requirement of the remote UE is met.

For the foregoing communication path switching procedure of the remote UE, there are at least the following two problems:
Problem (1): When a plurality of remote UEs simultaneously access a same relay UE, the relay UE cannot identify specific remote UE. Specifically, refer to FIG. 2. In S207, the relay UE cannot identify, in a forwarding process, specific remote UE corresponding to the RRC connection reconfiguration complete message. As a result, the target base station cannot pair newly accessed remote UE and a context of remote UE that is reserved in advance.

When a plurality of remote UEs simultaneously access a same relay UE, the relay UE cannot identify specific remote UE. Therefore, how the relay UE determines specific remote UE corresponding to an RRC connection reconfiguration complete message that is forwarded, and ensures that the target base station correctly pairs the newly accessed remote UE and the context of the remote UE that is reserved in advance needs to be urgently resolved.

Problem (2): Bearer setup of the relay UE causes relatively long interruption time, and causes a relatively high communication delay. Refer to FIG. 2. In S208, after receiving the RRC connection reconfiguration complete message of the remote UE, the target base station sets up a data bearer for the relay UE, causing relatively long interruption time. How to reduce the interruption time of the bearer setup of the relay UE and ensure a low communication delay is a problem to be resolved.

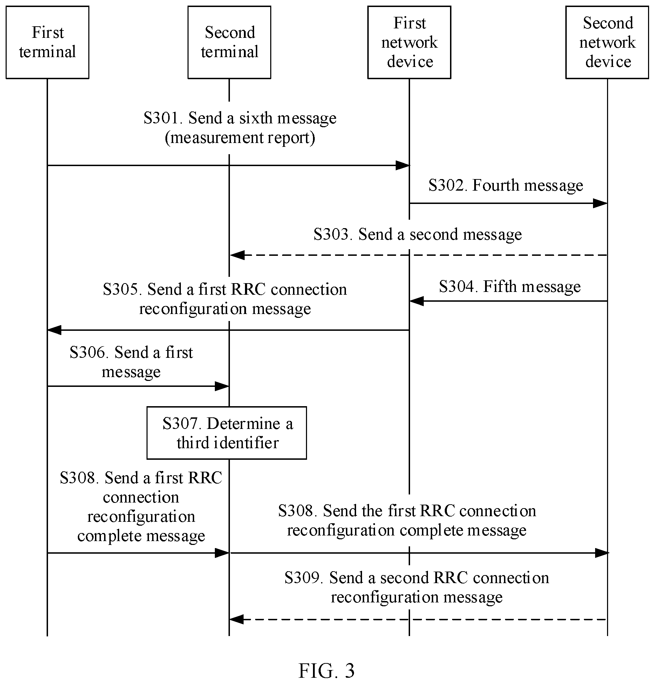

An embodiment of this application provides a communication method. As shown in FIG. 3, the method 300 includes the following operations:
S306: A first terminal sends a first message to a second terminal, where the first message includes a first identifier, and the first identifier identifies the first terminal.

Correspondingly, the second terminal receives the first message sent by the first terminal.

The first message may be a PC5-RRC message.

Optionally, the first message indicates the first terminal to perform second terminal-based communication path switching.

In a possible manner, the first message is sent after a unicast connection is established between the first terminal and the second terminal, or in other words, sent after a sidelink is established between the first terminal and the second terminal.

In another possible manner, the first message may be sent in a process of establishing a unicast connection between the first terminal and the second terminal. In other words, in a process of establishing a unicast connection, the first terminal reports the first identifier to the second terminal by using the first message. It is easy to understand that before this, the first terminal further needs to report the first identifier of an access stratum (access stratum) to an upper layer. The first identifier may be a local identifier (local identifier, local ID), a cell radio network temporary identifier (cell radio network temporary identifier, C-RNTI), a 5G temporary mobile subscriber identity (5G S-temporary mobile subscriber identity, 5G-S-TMSI), a radio resource control transaction identifier (radio resource control transaction identifier, rrc-Transactionldentifier), or a layer 2 identifier (layer 2 identifier, L2 ID) of the first terminal.

It is easy to understand that, when the first identifier in this embodiment is rrc-Transactionldentifier, the first identifier is an identifier of a message between a first network device and the first terminal, but needs to be unique between a second network device and the second terminal. To be specific, when allocating rrc-TransactionIdentifier of a first RRC connection reconfiguration message, the second network device cannot use rrc-Transactionldentifier that has been used between the second network device and the second terminal or another remote terminal relayed by using the second terminal.

S308: The second terminal forwards, based on a third identifier, a first radio resource control (radio resource control, RRC) connection reconfiguration complete message that is sent by the first terminal to the second network device.

That the second terminal forwards, based on a third identifier, a first radio resource control RRC connection reconfiguration complete message that is sent by the first terminal to the second network device may be understood as: The third identifier is carried when the second terminal forwards the first RRC connection reconfiguration complete message that is sent by the first terminal to the second network device.

To be specific, the first terminal sends the first RRC connection reconfiguration complete message to the second network device by using the second terminal, where the first RRC connection reconfiguration complete message indicates that the first terminal completes RRC connection reconfiguration, and the third identifier is carried when the second terminal forwards the first RRC connection reconfiguration complete message. In other words, the third identifier is carried when the second terminal forwards the first RRC connection reconfiguration complete message that is sent by the first terminal to the second network device. The third identifier identifies the first terminal on a relay communication link that is based on the second terminal. In other words, the third identifier is a unique identifier identifying the first terminal on the relay communication link.

To resolve a problem that the second terminal cannot identify, in a forwarding process, a specific first terminal corresponding to the first RRC connection reconfiguration complete message, and the second network device cannot pair a newly accessed first terminal and a context of a first terminal that is reserved in advance, the second terminal needs to determine the third identifier before forwarding the first RRC connection reconfiguration complete message. That is, before the operation S308, the method 300 may further include the following step:
S307: The second terminal determines the third identifier.

To be specific, the second terminal may determine the third identifier based on the first identifier in the operation S306. The third identifier identifies the first terminal on the relay link based on the second terminal device. For example, the third identifier is a local ID of the first terminal. By using the third identifier, the second terminal can distinguish a specific first terminal corresponding to the first RRC connection reconfiguration complete message that is forwarded. It is easy to understand that, in this embodiment of this application, the second terminal is not limited to determining the third identifier only in the operation S307, and the second terminal may determine the third identifier when receiving the first identifier of the first terminal.

In an example, the following provides several different implementations for determining the third identifier in the foregoing operation S307.

Implementation 1: The first identifier is the third identifier.

That is, the first identifier included in the first message is directly the third identifier. In other words, the second terminal directly obtains the third identifier from the first message.

Optionally, after the first identifier of the first terminal sent by the second network device is received, it may be determined that the first identifier is directly the third identifier.

Implementation 2: The second terminal allocates the third identifier based on the first identifier.

The second terminal allocates the third identifier based on the first identifier, where the first identifier may be a C-RNTI or a 5G-S-TMSI.

It may be understood that the second terminal allocates, to the first terminal based on the C-RNTI or the 5G-S-TMSI of the first terminal, the local ID corresponding to the first terminal, so as to distinguish the first terminal on the relay link that is based on the second terminal.

After allocating the third identifier, the second terminal sends second indication information to the second network device, where the second indication information includes an association relationship between the first identifier and the third identifier. By using the second indication information, the second terminal device may determine the association relationship between the first identifier and the third identifier. In this embodiment of this application, allocating an identifier may also be understood as generating an identifier.

Implementation 3: The second terminal receives the third identifier allocated by the second network device.

After receiving the first message, the second terminal reports the first identifier to the second network device, and the second network device allocates the third identifier based on the first identifier, and sends an association relationship between the first identifier and the third identifier to the second terminal.

That is, the third identifier is allocated by the second network device based on the first identifier after the second terminal reports the first identifier.

Implementation 4: The second terminal and the second network device allocate the third identifier based on the L2 ID of the first terminal.

When the first identifier is rrc-Transactionldentifier, the second terminal can neither parse nor identify the first identifier, but the second terminal may maintain the third identifier with the second network device by using the L2 ID of the first terminal. Specifically, the second terminal allocates the third identifier based on the L2 ID, and sends second indication information to the second network device, where the second indication information includes an association relationship between the L2 ID and the third identifier, and the second terminal device may determine the association relationship between the L2 ID of the first terminal and the third identifier by using the second indication information. Alternatively, the second terminal sends the L2 ID of the first terminal to the second network device, and the second network device allocates the third identifier based on the L2 ID, and sends an association relationship between the L2 ID and the third identifier to the second terminal.

To resolve the foregoing technical problem 2, the optional method 300 further includes the following step:
S303: The second terminal receives a second message from the second network device, where the second message may be an RRC connection reconfiguration message, and includes configuration information of a first bearer.

The second terminal sets up the first bearer based on the configuration information of the first bearer. The first bearer includes a radio bearer for transmitting signaling and data of the first terminal between the second terminal and the first terminal, and a radio bearer for transmitting signaling and data of the first terminal between the second terminal and the second network device.

Optionally, the second terminal sends a first bearer setup complete message to the second network device, to indicate that the first bearer is set up.

The first bearer is set up in the operation S303, so that interruption time caused by bearer setup of the second terminal can be reduced, and a low communication delay can be ensured.

Optionally, the second message further includes the first identifier.

It is easy to understand that the second terminal may determine the third identifier based on the first identifier. For a specific implementation method, refer to the descriptions of the operation 306. In this embodiment of this application, an occasion at which the second terminal determines the third identifier based on the first identifier is not limited. In other words, the second terminal may determine the third identifier in S306, or may determine the third identifier in S303, provided that the third identifier is determined before the operation 308.

Optionally, the second message further includes fourth indication information, and the fourth indication information indicates that the second terminal is a target terminal for communication path switching of the first terminal. For example, the fourth indication information may indicate that a new first terminal is to access the second terminal. For example, the fourth indication information may indicate that new remote UE accesses the second terminal, or the fourth indication information may not only indicate that new remote UE accesses the second terminal, but also carry an identifier of the remote UE, for example, a C-RNTI or a local ID corresponding to the remote UE.

In a possible manner, the second message includes only the fourth indication information, the second network device indicates, by using the fourth indication information, that a new first terminal is to access the second terminal, and the second terminal may determine the third identifier based on the fourth indication information.

Optionally, the second terminal may determine the third identifier based on the fourth indication information. For a specific implementation method, refer to the descriptions of the operation 306. A difference lies in that the first identifier in the operation 306 is replaced with the fourth indication information. In this embodiment of this application, an occasion at which the second terminal determines the third identifier based on the fourth indication information is not limited. In other words, the second terminal may determine the third identifier in S306, or may determine the third identifier in S303, provided that the third identifier is determined before the operation 308.

In the operation 308, the second terminal has a plurality of implementations to forward the first RRC connection reconfiguration complete message that is sent by the first terminal to the second network device.

Implementation 1: The second terminal forwards the first RRC connection reconfiguration complete message by using the first bearer. In other words, the first RRC connection reconfiguration complete message is carried on the first bearer that is set up between the second terminal and the second network device in the operation S303.

Implementation 2: The second terminal forwards the first RRC connection reconfiguration complete message by using a preconfigured second bearer, and the third identifier is carried when the first RRC connection reconfiguration complete message is forwarded. For example, the second terminal forwards the first RRC connection reconfiguration complete message of the first terminal through a public signaling radio bearer (signaling radio bearer 1, SRB) channel.

Implementation 3: The second terminal forwards the first RRC connection reconfiguration complete message by using a third bearer. The implementation 3 includes the following steps:
The second terminal sends a third bearer setup request message to the second network device, where the third bearer setup request message includes the third identifier and is for requesting to set up the third bearer. The second terminal forwards the first RRC connection reconfiguration complete message by using the third bearer. For example, the second terminal reports the third identifier (local ID) of the first terminal, and requests the second network device to set up an SRB channel dedicated to the first terminal, and then the second terminal forwards the first RRC connection reconfiguration complete message on the SRB channel dedicated to the first terminal.

S309: The second network device sends a second RRC connection reconfiguration message to the second terminal, where the second RRC connection reconfiguration message carries the third identifier.

To be specific, after the second network device receives the first RRC connection reconfiguration complete message forwarded by the second terminal, the second network device sends the second RRC connection reconfiguration message to the second terminal, to indicate to set up a radio bearer for transmitting signaling and data of the first terminal between the second terminal and the first terminal, and a radio bearer for transmitting signaling and data of the first terminal between the second terminal and the second network device. For example, a second connection reconfiguration message may include the third identifier (for example, the local ID) of the first terminal and related bearer configuration information. The second terminal sets up, based on the related bearer configuration information, a radio bearer for transmitting signaling and data of the first terminal between the second terminal and the first terminal, a radio bearer for transmitting signaling and data of the first terminal between the second terminal and the second network device, and a mapping relationship between the two radio bearers.

Optionally, the second network device receives a second RRC connection reconfiguration complete message sent by the second terminal, where the message indicates that the second terminal completes RRC connection reconfiguration. It is easy to understand that the operation S309 is an optional operation. If the bearer has been set up in S303, the operation 303 may be omitted. On the contrary, if the operation S303 is not performed, the operation S309 needs to be performed to set up the bearer.

In the method 300, before the first terminal sends the first message to the second terminal, this embodiment may further include the following step:
S301: The first terminal sends a sixth message to the first network device.

Correspondingly, the first network device receives the sixth message, where the sixth message may be a measurement report message. The sixth message may include at least one second candidate identifier, the second candidate identifier identifies a second candidate terminal, and the second candidate terminal is a candidate target terminal for the communication path switching of the first terminal. The sixth message may be a measurement report of the first terminal, and may include a C-RNTI of the second candidate terminal and a serving cell identifier (Cell ID) of the second candidate terminal and/or measurement information of a relay communication link between the first terminal and the second candidate terminal.

The first network device determines, from the at least one second candidate terminal based on the measurement report and a specific criterion, to switch a communication link of the first terminal to a relay communication link passing through the second terminal. For example, the criterion may be that channel reference signal received power (reference signal received power, RSRP) of a direct communication link is less than a threshold; channel RSRP of a sidelink is greater than a threshold; or channel RSRP of a sidelink is greater than channel RSRP of a direct communication link and exceeds a threshold. The direct communication link is a link between the first terminal and the first network device, and the sidelink is a link between the first terminal and a candidate terminal device.

The first network device determines, based on a serving cell identifier of the second terminal, that a serving cell of the second terminal is the first network device or a neighboring second network device. If the serving cell is the first network device, the operation S302 and the operation S304 in the method 300 may be omitted, and another operation, for example, a function of the second network device in S303, is implemented by the first network device. If the serving cell is the second network device, the operation S302 and the operation S304 are performed.

S302: The first network device sends a fourth message to the second network device, where the fourth message may be a switching request message.

To be specific, the first network device sends the fourth message to the second network device to request to switch the communication path of the first terminal to the second terminal. In other words, the first terminal requests to access the second network device through a relay service of the second terminal. The second terminal is a terminal within coverage of the second network device. Optionally, the fourth message may include an identifier (for example, a C-RNTI) of the second terminal and context information of the first terminal.

S304: The second network device receives the fourth message, and identifies the first terminal and the second terminal based on the fourth message.

The second network device sends a fifth message to the first network device. The fifth message may be a switching request acknowledgment message, the fifth message includes a first RRC connection reconfiguration message, the first RRC connection reconfiguration message includes a second identifier and first indication information, the first indication information indicates the first terminal to perform the communication path switching, the second identifier identifies the second terminal, the second terminal is the target terminal for the communication path switching, and the first RRC connection reconfiguration message carries the first identifier.

The first indication information indicates the first terminal to perform path switching.

The first identifier identifies the first terminal, and the first identifier may be a local ID, a C-RNTI, rrc-TransactionIdentifier, or a 5G-S-TMSI. The second identifier identifies the second terminal, where the second identifier may be a C-RNTI.

It is easy to understand that, when the first identifier in this embodiment is rrc-Transactionldentifier, the first identifier is an identifier of a message between the first network device and the first terminal, but needs to be unique between the second network device and the second terminal. To be specific, when allocating rrc-Transactionldentifier of a first RRC message, the second network device cannot use rrc-Transactionldentifier that has been used between the second network device and the second terminal or another remote terminal relayed by using the second terminal. Optionally, the fifth message may further include fourth bearer configuration information, and the fourth bearer configuration information includes radio bearer configuration information of a link between the first terminal and the second terminal, and/or radio bearer configuration information of a link between the first terminal and the second network device. The fourth bearer configuration information is configuration information that is configured by the second network device for the first terminal by using the first network device, and may include a configuration of a radio link control (radio link control, RLC) bearer between the first terminal and the second terminal and a configuration of an end-to-end packet data convergence protocol (packet data convergence protocol, PDCP) between the first terminal and the second network device.

Correspondingly, the first network device receives the fifth message, and determines, based on the fifth message, to indicate the first terminal to perform the communication path switching.

S305: The first network device sends the first RRC connection reconfiguration message to the first terminal, where the first RRC connection reconfiguration message includes the first identifier, the second identifier, and the first indication information, the first indication information indicates the first terminal to perform the communication path switching, and the second terminal is the target terminal for path switching of the first terminal.

The first identifier may be a local ID, a C-RNTI, rrc-Transactionldentifier, or a 5G-S-TMSI.

The second identifier may be a C-RNTI.

Optionally, the first RRC connection reconfiguration message may further include fourth bearer configuration information.

Correspondingly, the first terminal receives the first RRC connection reconfiguration message sent by the first network device, and the first terminal determines, based on the first RRC connection reconfiguration message, to perform the communication path switching. In other words, the first terminal accesses the second network device by using the relay service of the second terminal.

Optionally, the first terminal sets up, based on the fourth bearer configuration information in the first RRC connection reconfiguration message, a radio bearer of a link between the second terminal and the first terminal, and/or a radio bearer of a link between the first terminal and the second network device. Optionally, the first terminal may further set up an RLC bearer between the first terminal and the second terminal and an end-to-end PDCP between the first terminal and the second network device.

Optionally, after the first terminal completes RRC connection reconfiguration based on the first RRC connection reconfiguration message, the first terminal determines to send the first RRC connection reconfiguration complete message to the second network device by using the second terminal.

In the method 300 in Embodiment 1, the identifier identifying the first terminal is allocated by the second terminal or allocated by the second network device. However, in the method 400 in Embodiment 2, the first terminal determines the identifier, so that the second terminal can identify each first terminal, and assist the second network device in pairing a newly accessed first terminal and a context of a first terminal that is reserved in advance.

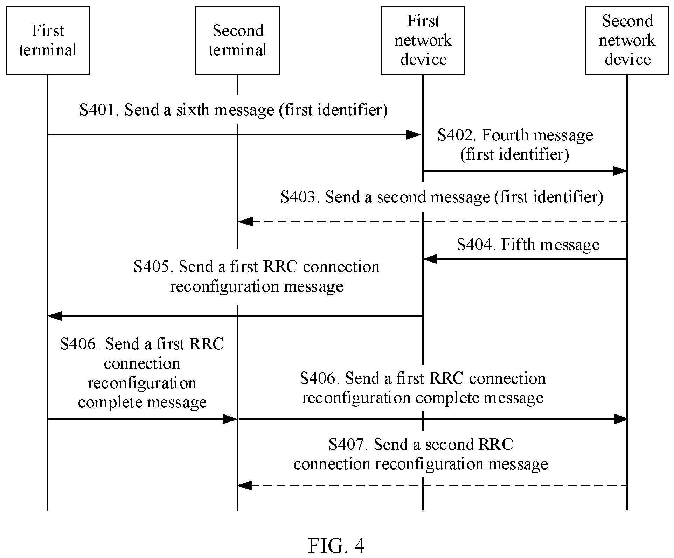

An embodiment of this application provides another communication method 400. As shown in FIG. 4, the method includes the following operations:
S401: A first terminal sends a sixth message to a first network device, where the sixth message may be a measurement report message.

Correspondingly, the first network device receives the sixth message. The sixth message may include a first identifier and at least one second candidate identifier. The second candidate identifier identifies a second candidate terminal, and the second candidate terminal is a candidate target terminal for communication path switching of the first terminal. Optionally, the sixth message may further include a cell identifier corresponding to the at least one second candidate identifier, and measurement information of a relay communication link between the first terminal and the second candidate terminal. The sixth message may be a measurement report of the first terminal.

The first identifier identifies the first terminal. For example, the first identifier is a layer 2 identifier (layer 2 identifier, L2 ID) of the first terminal. It may be understood that the first identifier and the measurement report may be sent in one message, or may be separately sent in a plurality of messages. This is not limited in this embodiment of this application, provided that the first terminal reports the first identifier of the first terminal.

The measurement report may further include a C-RNTI of the second candidate terminal and a serving cell identifier (Cell ID) of the second candidate terminal, and measurement information of a relay communication link between the first terminal and the second candidate terminal. The first network device determines, from at least one second candidate terminal based on the measurement report and a specific criterion, to switch a communication link of the first terminal to a relay communication link passing through the second terminal. For example, the criterion may be that channel reference signal received power (reference signal received power, RSRP) of a direct communication link is less than a threshold; channel RSRP of a sidelink is greater than a threshold; or channel RSRP of a sidelink is greater than channel RSRP of a direct communication link and exceeds a threshold. The direct communication link is a link between the first terminal and the first network device, and the sidelink is a link between the first terminal and a candidate terminal device.

The first network device determines, based on a serving cell identifier of the second terminal, that a serving cell of the second terminal is the first network device or a neighboring second network device. If the serving cell is the first network device, the operation S402 and the operation S404 in the method 400 may be omitted, and another operation, for example, a function of the second network device in S403, is implemented by the first network device.

S402: The first network device sends a fourth message to the second network device, where the fourth message may be a switching request message.

To be specific, the first network device sends the fourth message to the second network device to request to switch the communication path of the first terminal to the second terminal that can provide a relay service. In other words, the first terminal requests to access the second network device through a relay service of the second terminal. The second terminal is a terminal within coverage of the second network device. Optionally, the fourth message may include a second identifier (for example, a C-RNTI) of the second terminal, context information of the first terminal, and the first identifier of the first terminal.

S404: The second network device sends a fifth message to the first network device, where the fifth message may be a switching request acknowledgment message, the fifth message includes a first RRC connection reconfiguration message, and the first RRC connection reconfiguration message includes a second identifier and first indication information.

The first indication information indicates the first terminal to perform path switching.

The second identifier identifies the second terminal, where the second terminal is the target terminal for the communication path switching.

Optionally, the fifth message may further include fourth bearer configuration information, and the fourth bearer configuration information includes radio bearer configuration information of a link between first terminal and the second terminal, and/or radio bearer configuration information of a link between the first terminal and the second network device. The fourth bearer configuration information is configuration information that is configured by the second network device for the first terminal by using the first network device, and may include a configuration of an RLC bearer between the first terminal and the second terminal and a configuration of an end-to-end PDCP between the first terminal and the second network device.

Correspondingly, the first network device receives the fifth message, and determines, based on the fifth message, to indicate the first terminal to perform the communication path switching.

S405: The first network device sends the first RRC connection reconfiguration message to the first terminal, where the first RRC connection reconfiguration message includes the second identifier and the first indication information, the first indication information indicates the first terminal to perform the communication path switching, and the second terminal is the target terminal for the communication path switching of the first terminal. It may be understood that, after receiving the first RRC connection reconfiguration message from the second network device, the first network device transparently transmits the first RRC connection reconfiguration message to the first terminal.

The second identifier may be the C-RNTI of the second terminal.

Optionally, the first RRC connection reconfiguration message may further include fourth bearer configuration information.

Correspondingly, the first terminal receives the first RRC connection reconfiguration message sent by the first network device, and the first terminal determines, based on the first RRC connection reconfiguration message, to perform the communication path switching. In other words, the first terminal accesses the second network device by using the relay service of the second terminal.

Optionally, the first terminal sets up, based on the fourth bearer configuration information in the first RRC connection reconfiguration message, a radio bearer of a link between the second terminal and the first terminal, and/or a radio bearer of a link between the first terminal and the second network device. Optionally, the first terminal may further set up an RLC bearer between the first terminal and the second terminal and an end-to-end PDCP between the first terminal and the second network device.

Optionally, after the first terminal completes RRC connection reconfiguration based on the first RRC connection reconfiguration message, the first terminal determines to send the first RRC connection reconfiguration complete message to the second network device by using the second terminal.

S406: The second terminal forwards the first RRC connection reconfiguration complete message that is sent by the first terminal to the second network device.

To be specific, the first terminal sends the first RRC connection reconfiguration complete message to the second network device by using the second terminal, where the first RRC connection reconfiguration complete message indicates that the first terminal completes RRC connection reconfiguration.

Optionally, before S406, the first terminal and the second terminal establish a unicast connection.

Optionally, the method 400 further includes the following step:
Optionally, in an operation S403, the second terminal receives a second message from the second network device, where the second message includes configuration information of a first bearer.

The second terminal sets up the first bearer based on the configuration information of the first bearer. The first bearer includes a radio bearer for transmitting signaling and data of the first terminal between the second terminal and the first terminal, and a radio bearer for transmitting signaling and data of the first terminal between the second terminal and the second network device.

Optionally, the second terminal sends a first bearer setup complete message to the second network device, to indicate that the first bearer is set up.

The first bearer is set up in the operation S403, so that interruption time caused by bearer setup of the second terminal can be reduced, and a low communication delay can be ensured.

Optionally, the second message further includes the first identifier

It is easy to understand that the second terminal may determine the third identifier based on the first identifier. For a specific implementation method, refer to descriptions of the implementation 2 and the implementation 3 of the operation 306 in the method 300. In this embodiment of this application, an occasion at which the second terminal determines the third identifier based on the first identifier is not limited, provided that the third identifier is determined before the operation 406.

In another possible manner, the method 400 further includes the following operation:
Optionally, in an operation S407, the second network device sends a second RRC connection reconfiguration message to the second terminal, where the second RRC connection reconfiguration message carries a third identifier, and the third identifier is allocated by the second network device and is unique to the second terminal.

To be specific, after the second network device receives the first RRC connection reconfiguration complete message forwarded by the second terminal, the second network device sends the second RRC connection reconfiguration message to the second terminal, to indicate to set up a radio bearer for transmitting signaling and data of the first terminal between the second terminal and the first terminal, and a radio bearer for transmitting signaling and data of the first terminal between the second terminal and the second network device.

Optionally, the second network device receives a second RRC connection reconfiguration complete message sent by the second terminal, where the message indicates that the second terminal completes RRC connection reconfiguration. It is easy to understand that the operation S407 is an optional operation. If the bearer has been set up in S406, the operation 407 may be omitted.

In the method 400 in Embodiment 2 of this application, the first identifier may be an L2 ID of the first terminal.

According to the method 400, the first terminal reports the L2 ID of the first terminal to the first network device, and the L2 ID of the first terminal is carried in the operation S401 and the operation S402, so that the second terminal can identify the first terminal that has switched the communication path for access. The first bearer is set up in the operation S403, so that the interruption time caused by bearer setup of the second terminal can be reduced, a low communication delay can be ensured, and a process of switching the first terminal from direct link communication to relay link communication is implemented.

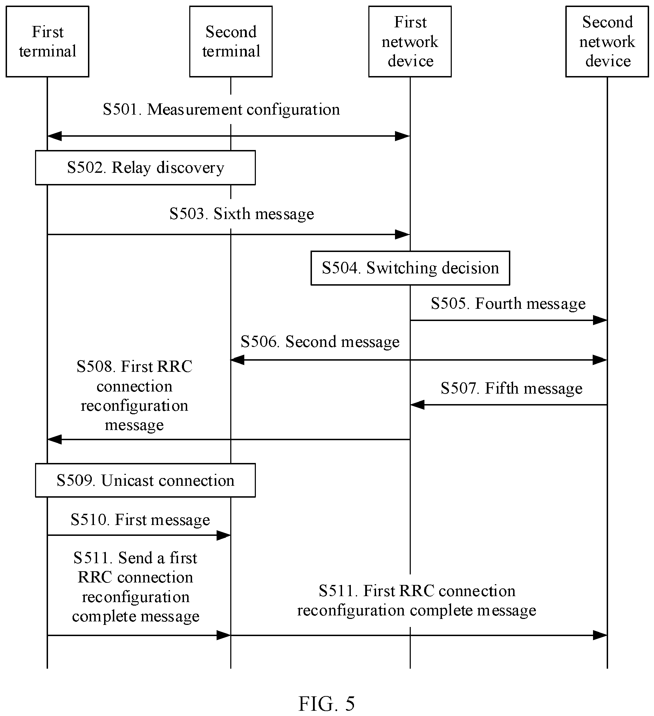

To resolve the foregoing problem, an embodiment of this application provides another communication method. As shown in FIG. 5, the method may include the following operations.

S501: A first network device sends measurement configuration information to a first terminal.

The measurement configuration information is used by the first terminal for measurement.

S502: The first terminal performs a relay discovery process. After the first terminal meets a trigger condition of a second terminal discovery (Relay Discovery) process, the first terminal performs the relay discovery process to discover a surrounding second candidate terminal through the discovery process, obtain a second candidate identifier corresponding to the second candidate terminal (for example, a C-RNTI of the second candidate terminal) and a serving cell identifier (Cell ID) corresponding to the second candidate terminal, and obtain quality information of a channel between the first terminal and the second candidate terminal through measurement.

S503: The first terminal sends a sixth message to the first network device, where the sixth message includes at least one second candidate identifier, the second candidate identifier identifies the second candidate terminal, and the second candidate terminal is a candidate target terminal for communication path switching of the first terminal. Optionally, the sixth message further includes a cell identifier corresponding to the at least one second candidate identifier, and measurement information of a relay communication link between the first terminal and the second candidate terminal. For example, the sixth message may be a measurement report. The measurement report carries the measurement information of the relay communication link with the second candidate terminal, and the measurement information includes the C-RNTI of the second candidate terminal, the cell identifier of the second candidate terminal, and the quality information of the channel with the second candidate terminal.

S504: The first network device determines a second identifier from the at least one second candidate identifier in the sixth message, where the second identifier identifies a second terminal, and the second terminal is a target terminal for communication path switching of the first terminal. That is, after receiving the measurement report, the first network device determines, based on a specific rule, the second identifier corresponding to a target second terminal from the at least one second candidate identifier, where the target second terminal is a target relay terminal to which the first terminal is to establish a connection.

The first network device identifies a cell identifier of a serving cell of the second terminal included in the measurement report, and determines that the serving cell of the second terminal belongs to a current base station or another neighboring base station.

In this embodiment of this application, an example in which the serving cell of the second terminal is another neighboring base station (a second network device) is used for description.

S505: After the first network device determines that the second terminal is the target terminal for path switching of the first terminal, the first network device sends a fourth message to the second network device, to request the first terminal to access the second network device through a relay service of the second terminal.

For example, the fourth message includes the second identifier corresponding to the second terminal, and the second terminal is a terminal within coverage of the second network device. For example, the fourth message is a switching request message, and the switching request message carries the C-RNTI of the second terminal. Optionally, the switching request message may further include a context of the first terminal.

S506: After the second network device receives the fourth message and identifies the second terminal and the first terminal, the second network device sends a second message to the second terminal, where the second message includes configuration information of a first bearer, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the second network device. In this implementation, the first bearer can be set up in advance, so that a relatively large communication delay or even communication interruption caused by bearer setup of the second terminal is reduced, and a low communication delay is ensured. The configuration information of the first bearer may include first radio bearer configuration information, second radio bearer configuration information, and a mapping relationship between at least one piece of first radio bearer configuration information in the first radio bearer configuration information and at least one piece of second radio bearer configuration information in the second radio bearer configuration information.

The first radio bearer configuration information is for configuring a radio bearer for transmitting data and signaling of the first terminal on a communication link between the second terminal and the first terminal. The second radio bearer configuration information is for configuring a radio bearer for transmitting data and signaling of the first terminal on a communication link between the second terminal and a base station.

It is easy to understand that if the second terminal is in an RRC idle (IDLE) state or an RRC inactive (Inactive) state, the second terminal needs to be triggered, through paging (paging), to enter an RRC connected (CONNECTED) state. In a possible implementation, the second network device allocates a third identifier of the second terminal unique to the first terminal to maintain a context of the first terminal. The second message may carry the third identifier. For example, the third identifier is a local ID of the first terminal.

Correspondingly, the second terminal receives the second message sent by the second network device, and configures a corresponding radio bearer based on the second message.

The second terminal configures, based on the third identifier of the first terminal and the first radio bearer configuration information, the radio bearer of the communication link between the second terminal and the first terminal, configures, based on the third identifier of the first terminal and the second radio bearer configuration information, the radio bearer for transmitting data and signaling of the first terminal on the communication link between the second terminal and the base station, and establishes a mapping relationship between the two communication link bearers based on a mapping relationship between a first radio bearer and a second radio bearer.

After the second terminal completes related configuration in the second message, the second terminal sends a second configuration complete message to the second network device. For example, when the second message may be an RRC connection reconfiguration message, after the second terminal completes RRC connection reconfiguration, the second terminal sends an RRC connection reconfiguration complete message to the second network device. Correspondingly, the second network device receives the second configuration complete message sent by the second terminal.

In another possible manner, the second terminal allocates the third identifier to the first terminal, and reports the third identifier to the second network device. For example, after receiving the second message, the second terminal allocates the third identifier to the first terminal based on the second message, and configures a corresponding radio bearer based on matching information carried in the second message. The second configuration complete message sent by the second terminal to the second network device carries the third identifier.

S507: The second network device receives the second configuration complete message sent by the second terminal, and sends a fifth message to the first network device. The fifth message includes a first RRC connection reconfiguration message, the first RRC connection reconfiguration message includes a second identifier and first indication information, the first indication information indicates the first terminal to perform the communication path switching, the second identifier identifies the second terminal, the second terminal is the target terminal for the communication path switching, the fifth message carries the third identifier, and the third identifier identifies the first terminal.

For example, the fifth message may be a switching request reply message, and the switching request reply message includes a local ID of the first terminal, a C-RNTI of the second terminal, and the first indication information.

Optionally, the fifth message may further include fourth bearer configuration information. The fourth bearer configuration information includes radio bearer configuration information of a link between the first terminal and the second terminal, and/or radio bearer configuration information of a link between the first terminal and the second network device. The fourth bearer configuration information is configuration information that is configured by the second network device for the first terminal by using the first network device, and may include a configuration of an RLC bearer between the first terminal and the second terminal, and a configuration of an end-to-end PDCP between the first terminal and the second network device.

S508: The first network device receives the fifth message, and sends the first RRC connection reconfiguration message to the first terminal, where the first RRC connection reconfiguration message includes the second identifier and the first indication information, the first indication information indicates the first terminal to perform the communication path switching, the second identifier identifies the second terminal, the second terminal is the target terminal for the communication path switching, the first RRC connection reconfiguration message carries the third identifier, and the third identifier identifies the first terminal. In other words, the third identifier is carried when the first network device sends the first RRC message to the first terminal.

S509: The first terminal establishes a unicast connection to the second terminal.

S510: The first terminal sends a first message to the second terminal, where the first message includes the third identifier (local ID) of the first terminal.

For example, the first message may be a PC5-RRC message, and the message carries the local ID of the first terminal. The second terminal identifies the local ID, and forwards subsequent signaling and data for the first terminal by using the first radio bearer and the second radio bearer that correspond to the local ID and that are previously set up.

It is easy to understand that, the first terminal may alternatively send the third identifier (local ID) of the first terminal to the second terminal in the process of establishing the unicast connection to the second terminal in S509. Before this, the first terminal further needs to report a local ID of an access stratum to an upper layer of the first terminal.

S511: The first terminal configures a corresponding radio bearer based on configuration information in the first RRC connection reconfiguration message. After completing RRC connection reconfiguration, the second terminal sends a first RRC connection reconfiguration complete message to the second network device.

According to the method, the second terminal can identify the first terminal based on the third identifier reported by the first terminal, and determine a specific first terminal corresponding to an RRC connection reconfiguration complete message that is forwarded, to ensure that the second network device correctly pairs a newly accessed first terminal and a context of a first terminal that is reserved in advance.

In a possible implementation, the second network device and the first network device may be a same base station. When the first network device identifies, in S505, the cell identifier of the serving cell of the second terminal that is included in the measurement report, and determines that the serving cell of the second terminal belongs to the base station, S505 and S507 in the foregoing embodiment may be omitted. It is easy to understand that another operation, for example, a function of the second network device in S506, is implemented by the first network device. Optionally, in the operations S506, S507, S508, and S509, the second network device may not allocate a third identifier unique to the second terminal to the first terminal, but may allocate the first identifier maintained by the base station. For example, the first identifier is a C-RNTI or a 5G-S-TMSI. In this case, this embodiment further includes an operation S510a performed before the operation S510.

### Manner 1:

After the second terminal allocates the third identifier based on the first identifier, the second terminal sends an association relationship between the first identifier and the third identifier to the second network device. In other words, the second terminal allocates the third identifier based on the first identifier of the first terminal, and reports an association relationship between the first identifier and the third identifier to the second network device.

### Manner 2:

The second terminal sends the first identifier to the second network device, and the second terminal receives third indication information sent by the second network device, where the third indication information includes an association relationship between the first identifier and the third identifier. In other words, the second terminal reports the first identifier to the second network device, and the second network device allocates the third identifier to the first terminal based on the first identifier, and then feeds back an association relationship between the first identifier and the third identifier to the second terminal. In this manner, the third identifier is maintained between the second terminal and the second network device.

According to the method 500, a radio bearer for transmitting signaling and data of the first terminal between the first terminal and the second terminal is configured on the second terminal side in advance, and a radio bearer for transmitting signaling and data of the first terminal between the second terminal and the second network device is set up, so that a relatively long delay or even interruption in a switching process is reduced.

In addition, the second network device allocates the local ID of the first terminal, so that the local ID is carried in S506, S507, S508, and S509, and the second terminal can identify the first terminal has switched the communication path for access.

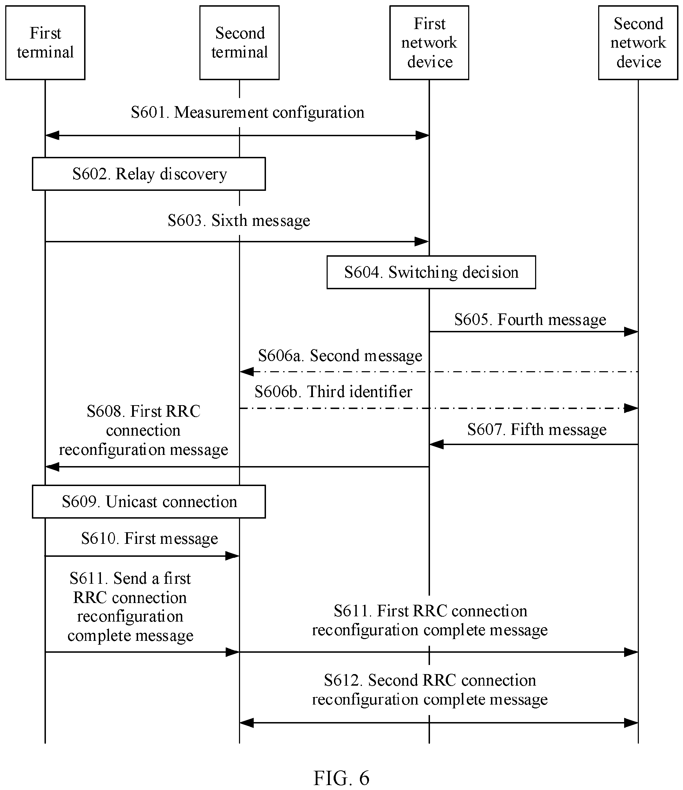

To resolve the foregoing problem, an embodiment of this application provides another communication method. In the method 500, the first bearer is set up in advance in the operation S506. As shown in FIG. 6, the method 600 differs in that a related bearer is set up after an RRC connection reconfiguration complete message of a first terminal forwarded by a second terminal is received. The method 600 may include the following operations:
S601: A first network device sends measurement configuration information to a first terminal.
S602: The first terminal performs a relay discovery process.
S603: The first terminal sends a sixth message to the first network device.
S604: The first network device makes a switching decision.
S605: After the first network device determines that a second terminal is a target terminal for path switching of the first terminal, the first network device sends a fourth message to a second network device, to request the first terminal to access the second network device through a relay service of the second terminal.
S607: The second network device sends a fifth message to the first network device. The fifth message includes a first RRC connection reconfiguration message, the first RRC connection reconfiguration message includes a second identifier and first indication information, the first indication information indicates the first terminal to perform communication path switching, the second identifier identifies the second terminal, the second terminal is the target terminal for the communication path switching, the first RRC connection reconfiguration message carries a third identifier, and the third identifier identifies the first terminal. In other words, the third identifier is carried when the first network device sends the first RRC message to the first terminal.

For example, the fifth message may be a switching request reply message, and the switching request reply message includes a local ID of the first terminal, a C-RNTI of the second terminal, and the first indication information.

Optionally, the fifth message may further include fourth bearer configuration information. The fourth bearer configuration information includes radio bearer configuration information of a link between the first terminal and the second terminal, and/or radio bearer configuration information of a link between the first terminal and the second network device. The fourth bearer configuration information is configuration information that is configured by the second network device for the first terminal by using the first network device, and may include a configuration of an RLC bearer between the first terminal and the second terminal and a configuration of an end-to-end PDCP between the first terminal and the second network device.

S608: The first network device receives the fifth message, and sends a first RRC connection reconfiguration message to the first terminal, where the first RRC connection reconfiguration message includes the second identifier and the first indication information, the first indication information indicates the first terminal to perform communication path switching, the second identifier identifies the second terminal, the second terminal is the target terminal for the communication path switching, the first RRC connection reconfiguration message carries the third identifier, and the third identifier identifies the first terminal. In other words, the third identifier is carried when the first network device forwards the first RRC message to the first terminal.

S609: The first terminal establishes a unicast connection to the second terminal.

S610: The first terminal sends a first message to the second terminal, where the first message includes the third identifier (local ID) of the first terminal. Optionally, the first terminal may send the first message to the second terminal after the unicast connection is established, or in a unicast connection process.

S611: The first terminal configures a corresponding radio bearer based on configuration information in the first RRC connection reconfiguration message. After completing RRC connection reconfiguration, the second terminal sends a first RRC connection reconfiguration complete message to the second network device.

When the second terminal forwards the first RRC connection reconfiguration complete message that is sent by the first terminal to the second network device, the second terminal has not set up a dedicated signaling radio bearer (signaling radio bearer, SRB) for the first terminal. In this embodiment of this application, the first RRC connection reconfiguration complete message may be forwarded in the following several manners:

### Forwarding manner 1:

The second terminal forwards the first RRC connection reconfiguration complete message of the first terminal through an SRB channel preconfigured by the second network device, where the first RRC connection reconfiguration complete message carries the third identifier of the first terminal.

### Forwarding manner 2:

The second terminal reports the third identifier of the first network device to the second network device, and requests the second network device to set up an SRB channel dedicated to the first terminal. Then, the second terminal forwards the first RRC connection reconfiguration complete message of the first terminal on the SRB channel dedicated to the first terminal, where the first RRC connection reconfiguration complete message carries the third identifier of the first terminal.

For related processes of the operations S601 to S605 and S607 to S611 in the method 600, refer to the related descriptions of S501 to S505 and S507 to S511 in the method 500. Details are not described again in this embodiment of this application.

A difference between the method 600 and the method 500 is that in the method 600, the first bearer is not set up in advance in the operation S306, but the radio bearer for transmitting signaling and data of the first terminal is set up for the second terminal in the operation S612. Details are as follows:
S612: The second network device sends a second RRC connection reconfiguration message to the second terminal, where the second RRC connection reconfiguration message includes configuration information of a first bearer, the configuration information of the first bearer is used by the second terminal to set up a radio bearer for transmitting signaling and data of the first terminal between the second terminal and the first terminal, and a radio bearer for transmitting signaling and data of the first terminal between the second terminal and the second network device.

The second RRC connection reconfiguration message may include first radio bearer configuration information, second radio bearer configuration information, and a mapping relationship between at least one piece of first radio bearer configuration information in the first radio bearer configuration information and at least one piece of second radio bearer configuration information in the second radio bearer configuration information.

The first radio bearer configuration information is for configuring a radio bearer for transmitting data and signaling of the first terminal on a communication link between the second terminal and the first terminal. The second radio bearer configuration information is for configuring a radio bearer for transmitting data and signaling of the first terminal on a communication link between the second terminal and a base station.

Correspondingly, the second terminal receives the second RRC connection reconfiguration message sent by the second network device, and configures a corresponding radio bearer based on the second RRC connection reconfiguration message

The second terminal configures, based on the third identifier of the first terminal and the first radio bearer configuration information, the radio bearer of the communication link between the second terminal and the first terminal, configures, based on the third identifier of the first terminal and the second radio bearer configuration information, the radio bearer for transmitting data and signaling of the first terminal on the communication link between the second terminal and the base station, and establishes a mapping relationship between the two communication link bearers based on a mapping relationship between a first radio bearer and a second radio bearer.

After the second terminal completes related configuration in the second RRC connection reconfiguration message, the second terminal sends a second RRC connection reconfiguration message complete message to the second network device.

Correspondingly, the second network device receives the second configuration complete message sent by the second terminal.

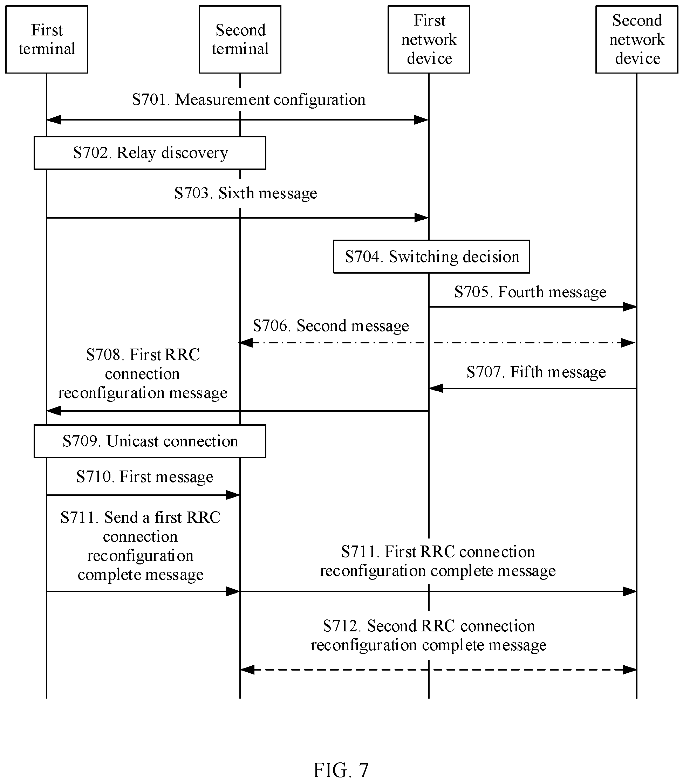

To resolve the foregoing problem, an embodiment of this application provides another communication method. The method 700 is different from the method 500 and the method 600. As shown in FIG. 7, in the method 700, a first identifier (for example, an L2 ID) used by a second network device to maintain a context of a first terminal is generated or allocated by the first terminal. The method 700 may include the following operations.

S701: A first network device sends measurement configuration information to the first terminal.

S702: The first terminal performs a relay discovery process.

For a related process of the operations S701 and S702 in the method 700, refer to the related descriptions of S501 and S502 in the method 500. Details are not described again in this embodiment of this application.

S703: The first terminal sends a sixth message to the first network device.

Correspondingly, the sixth message includes the first identifier and at least one second candidate identifier, the first identifier identifies the first terminal, the second candidate identifier identifies the second candidate terminal, the second candidate terminal is a candidate target terminal for communication path switching of the first terminal, the first identifier is an L2 ID of the first terminal, and the second candidate identifier is a C-RNTI of the candidate target terminal. It may be understood that the first terminal reports, to the first network device, an identifier of the candidate target terminal discovered in S702, and initiates a path switching request.

Correspondingly, the first network device receives the sixth message.

S704: The first network device makes a switching decision.

S705: After the first network device determines that the second terminal is the target terminal for path switching of the first terminal, the first network device sends a fourth message to the second network device, to request the first terminal to access the second network device through a relay service of the second terminal. The fourth message includes the first identifier of the first terminal and a second identifier of the second terminal, the second terminal is determined after the first network device makes the switching decision, and the second terminal is the target terminal for path switching of the first terminal.

S707: The second network device sends a fifth message to the first network device. The fifth message includes a first RRC connection reconfiguration message. The first RRC connection reconfiguration message includes the second identifier and first indication information. The first indication information indicates the first terminal to perform communication path switching, the second identifier identifies the second terminal, and the second terminal is the target terminal for the communication path switching.

For example, the fifth message may be a switching request reply message, and the switching request reply message includes a C-RNTI of the second terminal and the first indication information.

Optionally, the first RRC connection reconfiguration message may further include fourth bearer configuration information. The fourth bearer configuration information includes radio bearer configuration information of a link between the first terminal and the second terminal and/or radio bearer configuration information of a link between the first terminal and the second network device. The fourth bearer configuration information is configuration information that is configured by the second network device for the first terminal by using the first network device, and may include a configuration of an RLC bearer between the first terminal and the second terminal and a configuration of an end-to-end PDCP between the first terminal and the second network device.

It is easy to understand that if the first network device determines that the second network device accessed by the second terminal is the first network device, in other words, the first network device and the second network device are a same network device, the operations S705 and S706 may be omitted. A difference lies in that the first network device autonomously determines whether to allow the first terminal to perform switching and correspondingly configures the related bearer.

S708: The first network device receives the fifth message, and sends a first RRC connection reconfiguration message to the first terminal, where the first RRC connection reconfiguration message includes the second identifier and the first indication information, the first indication information indicates the first terminal to perform the communication path switching, the second identifier identifies the second terminal, and the second terminal is the target terminal for the communication path switching.

S709: The first terminal establishes a unicast connection to the second terminal.

S711: The first terminal configures a corresponding radio bearer based on configuration information in the first RRC connection reconfiguration message. After completing RRC connection reconfiguration, the second terminal sends a first RRC connection reconfiguration complete message to the second network device.

Before forwarding the first RRC connection reconfiguration complete message, the first terminal needs to determine a third identifier of the first terminal, where the third identifier is a local ID of the first terminal. To be specific, the third identifier, namely, the local ID of the first terminal is determined based on the first identifier L2 ID of the first terminal.

In this embodiment of this application, the second terminal may determine the third identifier in the following manners:

### Manner 1:

After the second terminal allocates the third identifier based on the first identifier, the second terminal sends an association relationship between the first identifier and the third identifier to the second network device. In other words, the second terminal allocates the third identifier based on the first identifier of the first terminal, and reports an association relationship between the first identifier and the third identifier to the second network device.

### Manner 2:

The second terminal sends the first identifier to the second network device, and the second terminal receives third indication information sent by the second network device, where the third indication information includes an association relationship between the first identifier and the third identifier. In other words, the second terminal reports the first identifier to the second network device, and the second network device allocates the third identifier to the first terminal based on the first identifier, and then feeds back an association relationship between the first identifier and the third identifier to the second terminal. In this manner, the second terminal and the second network device maintain the third identifier.

In a possible manner, a bearer related to forwarding of the first RRC connection reconfiguration complete message is set up for the second terminal in advance. The method 700 may further include the operation S706:
After the second network device receives a fourth message and identifies the second terminal and the first terminal, the second network device sends a second message to the second terminal, where the second message includes configuration information of a first bearer, the configuration information of the first bearer is used by the second terminal to set up the first bearer, and the first bearer includes a radio bearer for transmitting signaling and data of the first terminal between the second terminal and the first terminal, and a radio bearer for transmitting signaling and data of the first terminal between the second terminal and the second network device. In this implementation, the first bearer can be set up in advance, so that a relatively large communication delay or even communication interruption caused by bearer setup of the second terminal is reduced, and a low communication delay is ensured.

Optionally, the second message carries the first identifier of the first terminal, and the first identifier is the L2 ID of the first terminal.

For related implementations of the operation S706, refer to the related descriptions of S506. A difference lies in that the second message in S706 carries the L2 ID of the first terminal.

In another possible implementation, when the second terminal forwards the first RRC connection reconfiguration complete message that is sent by the first terminal to the second network device, the second terminal has not set up a dedicated signaling radio bearer (signaling radio bearer, SRB) for the first terminal. In this implementation, the method 700 may further include an optional operation S712. In this embodiment of this application, the first RRC connection reconfiguration complete message may be forwarded in the following several manners:

### Forwarding manner 1:

The second terminal forwards the first RRC connection reconfiguration complete message of the first terminal based on an SRB channel preconfigured by the second network device or a preset default SRB channel, where the first RRC connection reconfiguration complete message carries the third identifier of the first terminal.

### Forwarding manner 2:

The second terminal reports the third identifier of the first network device to the second network device, and requests the second network device to set up an SRB channel dedicated to the first terminal. Then, the second terminal forwards the first RRC connection reconfiguration complete message of the first terminal on the SRB channel dedicated to the first terminal, where the first RRC connection reconfiguration complete message carries the third identifier of the first terminal.

### Forwarding manner 3:

The second terminal forwards the first RRC connection reconfiguration complete message of the first terminal based on the first bearer, where the first RRC connection reconfiguration complete message carries the third identifier of the first terminal. The first bearer may be set up by using the second message in the process S705.

Optionally, an operation S712 is as follows: The second network device sends a second RRC connection reconfiguration message to the second terminal, where the second RRC connection reconfiguration message includes configuration information of a first bearer, the configuration information of the first bearer is used by the second terminal to set up a radio bearer for transmitting signaling and data of the first terminal between the second terminal and the first terminal, and a radio bearer for transmitting signaling and data of the first terminal between the second terminal and the second network device.

The second RRC connection reconfiguration message may include first radio bearer configuration information, second radio bearer configuration information, and a mapping relationship between at least one piece of first radio bearer configuration information in the first radio bearer configuration information and at least one piece of second radio bearer configuration information in the second radio bearer configuration information.

The first radio bearer configuration information is for configuring a radio bearer for transmitting data and signaling of the first terminal on a communication link between the second terminal and the first terminal. The second radio bearer configuration information is for configuring a radio bearer for transmitting data and signaling of the first terminal on a communication link between the second terminal and a base station.

Correspondingly, the second terminal receives the second RRC connection reconfiguration message sent by the second network device, and configures a corresponding radio bearer based on the second RRC connection reconfiguration message.

The second terminal configures, based on the third identifier of the first terminal and the first radio bearer configuration information, the radio bearer of the communication link between the second terminal and the first terminal, configures, based on the third identifier of the first terminal and the second radio bearer configuration information, the radio bearer for transmitting data and signaling of the first terminal on the communication link between the second terminal and the base station, and establishes a mapping relationship between the two communication link bearers based on a mapping relationship between a first radio bearer and a second radio bearer.

After the second terminal completes related configuration in the second RRC connection reconfiguration message, the second terminal sends a second RRC connection reconfiguration message complete message to the second network device.

Correspondingly, the second network device receives the second configuration complete message sent by the second terminal.

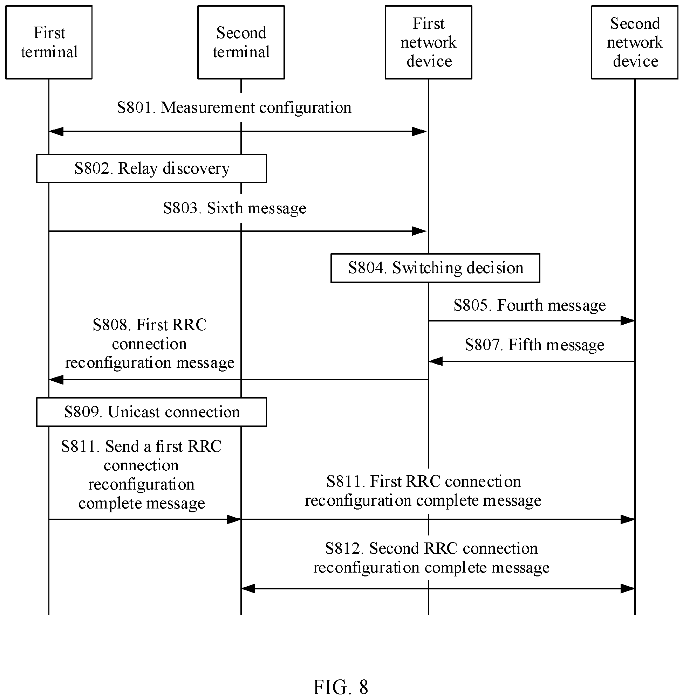

To resolve the foregoing problem, an embodiment of this application provides another communication method. As shown in FIG. 8, in the method 800, a second network device maintains a context of a first terminal by using rrc-transcationidentifier carried in an RRC reconfiguration message. The method 800 may include the following operations.

S801: A first network device sends measurement configuration information to a first terminal.

S802: The first terminal performs a relay discovery process.

S803: The first terminal sends a sixth message to the first network device.

S804: The first network device makes a switching decision.

S805: After the first network device determines that a second terminal is a target terminal for path switching of the first terminal, the first network device sends a fourth message to the second network device, to request the first terminal to access the second network device through a relay service of the second terminal.

S807: The second network device sends a fifth message to the first network device. The fifth message includes a first RRC connection reconfiguration message. The first RRC connection reconfiguration message includes a first identifier, a second identifier, and first indication information. The first identifier identifies the first terminal, the first indication information indicates the first terminal to perform communication path switching, the second identifier identifies the second terminal, the second terminal is the target terminal for the communication path switching, the first identifier is rrc-transcationidentifier of the first terminal, and the second identifier is a C-RNTI of the second terminal.

It is easy to understand that, when the first identifier in this embodiment is rrc-Transactionldentifier, the first identifier is an identifier of a message between the first network device and the first terminal, but needs to be unique between the second network device and the second terminal. To be specific, when allocating rrc-Transactionldentifier of a first RRC message, the second network device cannot use rrc-Transactionldentifier that has been used between the second network device and the second terminal or another remote terminal relayed by using the second terminal.

For example, the fifth message may be a switching request reply message, and the switching request reply message includes rrc-transcationidentifier of the first terminal, the C-RNTI of the second terminal, and the first indication information. Optionally, the fifth message may further include fourth bearer configuration information. The fourth bearer configuration information includes radio bearer configuration information of a link between the first terminal and the second terminal, and/or radio bearer configuration information of a link between the first terminal and the second network device. The fourth bearer configuration information is configuration information that is configured by the second network device for the first terminal by using the first network device, and may include a configuration of an RLC bearer between the first terminal and the second terminal and a configuration of an end-to-end PDCP between the first terminal and the second network device.

S808: The first network device receives the fifth message, and sends the first RRC connection reconfiguration message to the first terminal, where the first RRC connection reconfiguration message includes the first identifier, the second identifier, and the first indication information, the first identifier identifies the first terminal, the first indication information indicates the first terminal to perform communication path switching, the second identifier identifies the second terminal, and the second terminal is the target terminal for the communication path switching. In other words, the first network device sends the first RRC connection reconfiguration message to the first terminal by using rrc-transcationidentifier of the first terminal.

S809: The first terminal establishes a unicast connection to the second terminal.

S811: The first terminal configures a corresponding radio bearer based on the configuration information in the first RRC connection reconfiguration message. After completing RRC connection reconfiguration, the second terminal sends a first RRC connection reconfiguration complete message to the second network device. When the second terminal forwards the first RRC connection reconfiguration complete message, the first identifier of the first terminal, that is, rrc-transcationidentifier of the first terminal is carried.

Before forwarding the first RRC connection reconfiguration complete message, the first terminal needs to determine a third identifier of the first terminal, where the third identifier is a local ID of the first terminal.

In this embodiment of this application, the second terminal may determine the third identifier in the following manners: After the second terminal allocates the third identifier based on an L2 ID of the first terminal, the second terminal sends an association relationship between the first identifier and the third identifier to the second network device. In other words, the second terminal allocates the third identifier based on the L2 ID of the first terminal, and reports an association relationship between the L2 ID of the first terminal and the third identifier to the second network device. In another possible implementation, when the second terminal forwards the first RRC connection reconfiguration complete message that is sent by the first terminal to the second network device, the second terminal has not set up a dedicated signaling radio bearer for the first terminal. In this implementation, in the method 800, the first RRC connection reconfiguration complete message may be forwarded in several manners: through a preset default or preconfigured SRB channel or through an SRB channel requested to be set up. For a specific implementation, refer to related descriptions of S711 in the method 700.

Operation S812: The second network device sends a second RRC connection reconfiguration message to the second terminal, where the second RRC connection reconfiguration message includes configuration information of a first bearer, the configuration information of the first bearer is used by the second terminal to set up a radio bearer for transmitting signaling and data of the first terminal between the second terminal and the first terminal, and a radio bearer for transmitting signaling and data of the first terminal between the second terminal and the second network device.

The second RRC connection reconfiguration message may include first radio bearer configuration information, second radio bearer configuration information, and a mapping relationship between at least one piece of first radio bearer configuration information in the first radio bearer configuration information and at least one piece of second radio bearer configuration information in the second radio bearer configuration information.

The first radio bearer configuration information is for configuring a radio bearer for transmitting data and signaling of the first terminal on a communication link between the second terminal and the first terminal. The second radio bearer configuration information is for configuring a radio bearer for transmitting data and signaling of the first terminal on a communication link between the second terminal and a base station.

Correspondingly, the second terminal receives the second RRC connection reconfiguration message sent by the second network device, and configures a corresponding radio bearer based on the second RRC connection reconfiguration message.

The second terminal configures, based on the third identifier of the first terminal and the first radio bearer configuration information, the radio bearer of the communication link between the second terminal and the first terminal, configures, based on the third identifier of the first terminal and the second radio bearer configuration information, the radio bearer for transmitting data and signaling of the first terminal on the communication link between the second terminal and the base station, and establishes a mapping relationship between the two communication link bearers based on a mapping relationship between a first radio bearer and a second radio bearer.

After the second terminal completes related configuration in the second RRC connection reconfiguration message, the second terminal sends a second RRC connection reconfiguration message complete message to the second network device.

Correspondingly, the second network device receives the second configuration complete message sent by the second terminal.

It may be understood that, in the foregoing method embodiments of this application, these operations or steps are merely examples. In embodiments of this application, other operations or variations of various operations may be further performed. In addition, the operations may be performed in a sequence different from a sequence presented in embodiments of this application, and not all the operations in embodiments of this application may be necessarily to be performed.

It may be understood that in the foregoing embodiments of this application, a method implemented by a terminal (the first terminal or the second terminal) may also be implemented by a component (for example, a chip, a processor, a chip system, or a circuit) that can be configured in the terminal, and a method implemented by a network device (the first network device or the second network device) may also be implemented by a component (for example, a chip, a processor, a chip system, or a circuit) that can be configured in the network device. In addition, the first network device may also be referred to as a source base station, the second network device may also be referred to as a target base station, the first terminal may also be referred to as a remote terminal, and the second terminal may also be referred to as a relay terminal.

In the foregoing embodiments of this application, an example in which the first network device and the second network device are different network devices is mainly used for description. It is easy to understand that when the first network device and the second network device are a same network device, that is, when the first terminal and the second terminal access a same network device, an operation of the second network device in the foregoing embodiments of this application may be implemented by the first network device, and an operation of interaction between the first network device and the second network device may be implemented inside the first network device.

The foregoing mainly describes the solutions provided in embodiments of this application from a perspective of interaction between network elements. Correspondingly, embodiments of this application further provide a communication apparatus, and the communication apparatus is configured to implement the foregoing various methods. The communication apparatus may be a terminal device (the first terminal or the second terminal) in the foregoing method embodiments, or an apparatus including the foregoing terminal device, or a component (such as a chip, a processor, a chip system, or a circuit) that can be used in the terminal device. Alternatively, the communication apparatus may be a network device (such as the first network device or the second network device) in the foregoing method embodiments, or an apparatus including the foregoing network device, or a component that can be used in the network device. It may be understood that, to implement the foregoing functions, the communication apparatus includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. A person skilled in the art may use different methods to implement the described functions for each specific application, but such implementation should not be considered beyond the scope of this application.

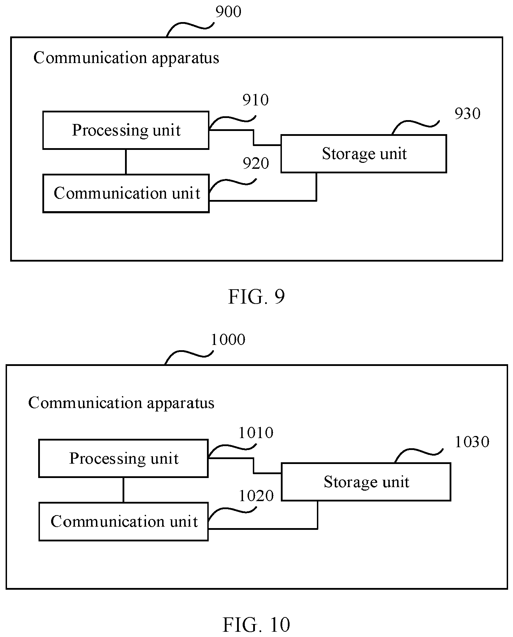

In embodiments of this application, the communication apparatus may be divided into function modules based on the foregoing method embodiments. For example, each function module may be obtained through division based on each corresponding function, or two or more functions may be integrated into one processing module. The integrated module may be implemented in a form of hardware, or may be implemented in a form of a software functional module. Apparatuses provided in embodiments of this application are described in detail below with reference to FIG. 9 to FIG. 10. It should be understood that descriptions of apparatus embodiments correspond to the descriptions of the method embodiments. Therefore, for content that is not described in detail, refer to the foregoing method embodiments. For brevity, some content is not described again.

FIG. 9 is a schematic structural diagram of a communication apparatus 900 according to an embodiment of this application. It should be understood that the communication apparatus 900 may implement any function corresponding to the first terminal in the embodiment shown in FIG. 3. The communication apparatus may be a terminal device, or may be a component (for example, a chip or a circuit) that may be configured in the terminal device. The communication apparatus 900 may include a processing unit 910 and a communication unit 920.

It should be noted that the communication unit in this embodiment of this application may also be referred to as a transceiver unit (module), and the processing unit may be referred to as a processing module.

For example, the communication unit 920 is configured to send a first message to a second terminal, where the first message includes a first identifier, and the first identifier identifies a first terminal. For related descriptions of the first message and the first identifier, refer to the related descriptions in the foregoing embodiments. Details are not described herein again.

Optionally, the communication unit 920 may further send a first RRC connection reconfiguration complete message to a second network device by using the second terminal.

Optionally, the communication unit 920 is further configured to receive a first RRC connection reconfiguration message sent by a first network device.

Optionally, the communication unit 920 is further configured to send a sixth message to the first network device, where the sixth message may include at least one second candidate identifier, the second candidate identifier identifies a second candidate terminal, and the second candidate terminal is a candidate target terminal for communication path switching of the first terminal.

Optionally, the processing unit 910 is configured to complete corresponding configuration based on the first RRC connection reconfiguration message.

In a possible design, the processing unit 910 may be a processor. The communication unit 920 may be a transceiver, or the communication unit 920 may be a communication interface. The storage unit 930 may be a memory.

In a possible manner, the communication apparatus 900 may implement any function corresponding to the second terminal in the embodiment shown in FIG. 3. The communication apparatus may be a terminal device, or may be a component (for example, a chip or a circuit) that may be configured in the terminal device. The communication apparatus 900 includes a processing unit 910 and a communication unit 920, and optionally, may further include a storage unit 930.

For example, the communication unit 920 is configured to receive a first message sent by a first terminal, where the first message includes a first identifier, and the first identifier identifies the first terminal. For related descriptions of the first message and the first identifier, refer to the related descriptions in the foregoing embodiments. Details are not described herein again.

Optionally, the communication unit 920 is further configured to forward a first RRC connection reconfiguration complete message that is sent by the first terminal to a second network device.

Optionally, the processing unit 910 is configured to determine a third identifier. For related descriptions of determining the third identifier, refer to the related descriptions in the foregoing embodiments. Details are not described herein again.

Optionally, the communication unit 920 is further configured to receive a second message from the second network device, where the second message includes configuration information of a first bearer. For related descriptions of the second message, refer to the related descriptions in the foregoing embodiments. Details are not described herein again. Optionally, the processing unit 910 is further configured to set up the first bearer based on the configuration information of the first bearer. The first bearer includes a radio bearer for transmitting signaling and data of the first terminal between a second terminal and the first terminal, and a radio bearer for transmitting signaling and data of the first terminal between the second terminal and the second network device.

Optionally, the communication unit 920 is further configured to receive a second RRC connection reconfiguration message of the second network device, where the second RRC connection reconfiguration message carries the third identifier.

Optionally, the communication apparatus 900 may further include a storage unit 930. The storage unit 930 may be configured to store other information such as computer-executable instructions and/or data. The processing unit 910 may read the instructions or the data stored in the storage unit 930, to implement a corresponding solution.

In a possible manner, the communication apparatus 900 may implement any function corresponding to the first terminal in the embodiment shown in FIG. 4. The communication apparatus may be a terminal device, or may be a component (for example, a chip or a circuit) that may be configured in the terminal device. The communication apparatus 900 includes a processing unit 910 and a communication unit 920, and optionally, may further include a storage unit 930.

For example, the communication unit 920 is configured to send a sixth message to a first network device, where the sixth message includes a first identifier. The sixth message may include the first identifier and at least one second candidate identifier, the second candidate identifier identifies a second candidate terminal, and the second candidate terminal is a candidate target terminal for communication path switching of the first terminal.

Optionally, the communication unit 920 is configured to receive a first RRC connection reconfiguration message sent by the first network device, where the first RRC connection reconfiguration message includes a second identifier and first indication information, the first indication information indicates the first terminal to perform the communication path switching, and the second terminal is a target terminal for path switching of the first terminal.

Optionally, the processing unit 910 is configured to set up a corresponding relay link-related bearer based on the first RRC connection reconfiguration message. Optionally, the processing unit 910 is configured to set up a radio bearer of a link between the first terminal and the second terminal based on fourth bearer configuration information in the first RRC connection reconfiguration message, and/or a radio bearer of a link between the first terminal and a second network device.

Optionally, the processing unit 910 is further configured to set up an RLC bearer between the first terminal and the second terminal and an end-to-end PDCP between the first terminal and the second network device.

Optionally, after the processing unit 910 completes RRC connection reconfiguration based on the first RRC connection reconfiguration message, the communication unit 920 is further configured to send a first RRC connection reconfiguration complete message to the second network device by using the second terminal, to indicate that the first terminal completes the RRC connection reconfiguration.

Optionally, the processing unit 910 is further configured to establish a unicast connection to the second terminal.

In a possible manner, the communication apparatus 900 may implement any function corresponding to the first terminal in the embodiment shown in any one of FIG. 5 to FIG. 8. The communication apparatus may be a terminal device, or may be a component (for example, a chip or a circuit) that may be configured in the terminal device. The communication apparatus 900 includes a processing unit 910 and a communication unit 920, and optionally, may further include a storage unit 930. For a related process of implementing the function by the communication apparatus 900, refer to the related descriptions in the foregoing embodiments. Details are not described herein again.

In a possible manner, the communication apparatus 900 may implement any function corresponding to the second terminal in the embodiment shown in FIG. 4. The communication apparatus may be a terminal device, or may be a component (for example, a chip or a circuit) that may be configured in the terminal device. The communication apparatus 900 includes a processing unit 910 and a communication unit 920, and optionally, may further include a storage unit 930.

For example, the communication unit 920 is configured to forward a first RRC connection reconfiguration complete message that is sent by the first terminal to a second network device.

Optionally, the processing unit 910 is configured to establish a unicast connection to the first terminal.

Optionally, the communication unit 920 is further configured to receive a second message from the second network device, where the second message includes configuration information of a first bearer.

Optionally, the processing unit 910 is further configured to set up the first bearer based on the configuration information of the first bearer. The first bearer includes a radio bearer for transmitting signaling and data of the first terminal between a second terminal and the first terminal, and a radio bearer for transmitting signaling and data of the first terminal between the second terminal and the second network device.

Optionally, the communication unit 920 is further configured to send a first bearer setup complete message to the second network device, to indicate that the first bearer is set up.

Optionally, the processing unit 910 is further configured to determine a third identifier based on a first identifier included in the second message.

Optionally, the communication unit 920 is further configured to receive a second RRC connection reconfiguration message sent by the second network device, where the second RRC connection reconfiguration message carries the third identifier, and the third identifier indicates the second terminal to set up a radio bearer for transmitting signaling and data of the first terminal between the second terminal and the first terminal, and a radio bearer for transmitting signaling and data of the first terminal between the second terminal and the second network device.

In a possible manner, the communication apparatus 900 may implement any function corresponding to the second terminal in the embodiment shown in any one of FIG. 5 to FIG. 8. The communication apparatus may be a terminal device, or may be a component (for example, a chip or a circuit) that may be configured in the terminal device. The communication apparatus 900 includes a processing unit 910 and a communication unit 920, and optionally, may further include a storage unit 930. For a related process of implementing the function by the communication apparatus 900, refer to the related descriptions in the foregoing embodiments. Details are not described herein again.

FIG. 10 is a schematic structural diagram of a communication apparatus 1000 according to an embodiment of this application. It should be understood that the communication apparatus 1000 may implement any function corresponding to the first network device in the embodiment shown in FIG. 3. The communication apparatus may be a network device, or may be a component (for example, a chip or a circuit) that may be configured in the network device. The communication apparatus 1000 may include a processing unit 1010 and a communication unit 1020.

It should be noted that the communication unit in this embodiment of this application may also be referred to as a transceiver unit (module), and the processing unit may be referred to as a processing module.

The communication unit 1020 is configured to receive a sixth message sent by a first terminal, where the sixth message may include at least one second candidate identifier, the second candidate identifier identifies a second candidate terminal, the second candidate terminal is a candidate target terminal for communication path switching of the first terminal, and the sixth message may be a measurement report of the first terminal.

The processing unit 1010 is configured to determine a second identifier based on the at least one second candidate identifier, where the second identifier is an identifier of a target terminal for communication path switching of the first terminal.

Optionally, the communication unit 1020 further sends a fourth message to the second network device to request to switch a communication path of the first terminal to a second terminal. Optionally, the fourth message may include an identifier (for example, a C-RNTI) of the second terminal and context information of the first terminal. Optionally, the communication unit 1020 further receives a fifth message from the second network device, where the fifth message includes a first RRC connection reconfiguration message, the first RRC connection reconfiguration message includes a second identifier and first indication information, the first indication information indicates the first terminal to perform communication path switching, the second identifier identifies a second terminal, the second terminal is a target terminal for the communication path switching, and the first RRC connection reconfiguration message carries a first identifier.

Optionally, the communication unit 1020 further sends a first RRC connection reconfiguration message to the first terminal, where the first RRC connection reconfiguration message includes a first identifier, a second identifier, and first indication information, the first indication information indicates the first terminal to perform communication path switching, and the second terminal is a target terminal for path switching of the first terminal.

In a possible design, the communication apparatus 1000 may implement any function corresponding to the second network device in the embodiment shown in FIG. 3. The communication apparatus may be a network device, or may be a component (for example, a chip or a circuit) that may be configured in the network device. The communication apparatus 1000 may include a processing unit 1010 and a communication unit 1020.

For example, the communication unit 1020 is configured to receive a fourth message sent by a first network device, to request to switch a communication path of the first terminal to the second terminal. Optionally, the fourth message may include an identifier (for example, a C-RNTI) of the second terminal and context information of the first terminal. Optionally, the communication unit 1020 further sends a fifth message to the first network device, where the fifth message includes a first RRC connection reconfiguration message, the first RRC connection reconfiguration message includes a second identifier and first indication information, the first indication information indicates the first terminal to perform communication path switching, the second identifier identifies the second terminal, the second terminal is a target terminal for the communication path switching, and the first RRC connection reconfiguration message carries the first identifier.

Optionally, the communication unit 1020 is further configured to receive a first RRC connection reconfiguration complete message that is from the first terminal and that is forwarded by the second terminal.

Optionally, the communication unit 1020 is further configured to send a second message to the second terminal, where the second message includes configuration information of a first bearer. For related descriptions of the second message, refer to the related descriptions in the foregoing embodiments. Details are not described herein again.

In a possible design, the processing unit 1010 may be a processor. The communication unit 1020 may be a transceiver, or the communication unit 1020 may be a communication interface. The storage unit 1030 may be a memory. Optionally, the communication apparatus 1000 may further include a storage unit 1030. The storage unit 1030 may be configured to store other information such as computer-executable instructions and/or data. The processing unit 1010 may read the instructions or the data stored in the storage unit 1030, to implement a corresponding solution.

In a possible design, the communication apparatus 1000 may implement any function corresponding to the second network device in the embodiment shown in any one of FIG. 4 to FIG. 8. The communication apparatus may be a network device, or may be a component (for example, a chip or a circuit) that may be configured in the network device. The communication apparatus 1000 may include a processing unit 1010 and a communication unit 1020.

For a related process of implementing the function by the communication apparatus 1000, refer to the related descriptions in the foregoing embodiments. Details are not described herein again.

In a possible design, the communication apparatus 1000 may implement any function corresponding to the first network device in the embodiment shown in any one of FIG. 4 to FIG. 8. The communication apparatus may be a network device, or may be a component (for example, a chip or a circuit) that may be configured in the network device. The communication apparatus 1000 may include a processing unit 1010 and a communication unit 1020.

For a related process of implementing the function by the communication apparatus 1000, refer to the related descriptions in the foregoing embodiments. Details are not described herein again.

It may be understood that the foregoing units may also be referred to as modules, circuits, or the like, and the foregoing units may be independently disposed, or may be all or partially integrated.

It should be understood that division into the units in the apparatus is merely logical function division. During actual implementation, all or a part of the units may be integrated into one physical entity or may be physically separated. In addition, all the units in the apparatus may be implemented in a form of software invoked by a processing element, or may be implemented in a form of hardware; or a part of units may be implemented in a form of software invoked by a processing element, and a part of units may be implemented in a form of hardware. For example, each unit may be an independently disposed processing element, or may be integrated into a chip of the apparatus for implementation. Alternatively, each unit may be stored in a memory in a form of a program to be invoked by a processing element of the apparatus to perform a function of the unit. In addition, the units may be all or partially integrated, or may be implemented independently. The processing element herein may also be referred to as a processor, and may be an integrated circuit having a signal processing capability. In an implementation process, the operations in the foregoing methods or the foregoing units may be implemented by using an integrated logic circuit of hardware in the processor element, or may be implemented in a form of software invoked by the processor element.

In an example, a unit in any one of the foregoing apparatuses may be one or more integrated circuits configured to implement the foregoing method, for example, one or more application-specific integrated circuits (Application-Specific Integrated Circuit, ASIC), one or more microprocessors (digital signal processor, DSP), one or more field programmable gate arrays (Field Programmable Gate Array, FPGA), or a combination of at least two of these integrated circuit forms. For another example, when the units in the apparatus may be implemented in a form of a program invoked by a processing element, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

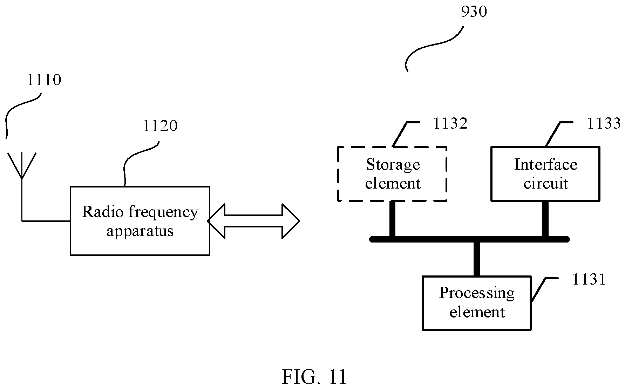

The foregoing unit (for example, a receiving unit) for receiving is an interface circuit of the apparatus, and is configured to receive a signal from another apparatus. For example, when the apparatus is implemented by a chip, the receiving unit is an interface circuit that is of the chip and that is configured to receive a signal from another chip or apparatus. The foregoing unit (for example, a sending unit) for sending is an interface circuit of the apparatus, and is configured to send a signal to another apparatus. For example, when the apparatus is implemented by a chip, the sending unit is an interface circuit that is of the chip and that is configured to send a signal to another chip or apparatus. FIG. 11 is a schematic structural diagram of a terminal according to an embodiment of this application. The terminal is configured to implement an operation of a terminal (for example, the first terminal or the second terminal) in the foregoing embodiments. As shown in FIG. 11, the terminal includes an antenna 1110, a radio frequency apparatus 1120, and a signal processing part 1130. The antenna 1110 is connected to the radio frequency apparatus 1120. In a downlink direction, the radio frequency apparatus 1120 receives, by using the antenna 1110, information sent by a network device or another terminal, and sends, to the signal processing part 1130 for processing, the information sent by the network device or the another terminal. In an uplink direction, the signal processing part 1130 processes information of the terminal, and sends the information to the radio frequency apparatus 1120. The radio frequency apparatus 1120 processes the information of the terminal, and then sends the processed information to the network device or another terminal by using the antenna 1110.

The signal processing part 1130 is configured to implement processing on each communication protocol layer of data. The signal processing part 1130 may be a subsystem of the terminal. The terminal may further include another subsystem, for example, a central processing subsystem, configured to process an operating system and an application layer of the terminal. For another example, a peripheral subsystem is configured to connect to another device. The signal processing part 1130 may be a separately disposed chip. Optionally, the foregoing apparatus may be located in the signal processing part 1130.

The signal processing part 1130 may include one or more processing elements 1131, for example, include a main control CPU and another integrated circuit, and further include an interface circuit 1133. In addition, the signal processing part 1130 may further include a storage element 1132. The storage element 1132 is configured to store data and a program. The program for performing the method performed by the terminal in the foregoing methods may be stored in the storage element 1132, or may not be stored in the storage element 1132, for example, stored in a memory outside the signal processing part 1130. When used, the program is loaded by the signal processing part 1130 into a cache for use. The interface circuit 1133 is configured to communicate with an apparatus. The foregoing apparatus may be located in the signal processing part 1130. The signal processing part 1130 may be implemented by using a chip. The chip includes at least one processing element and an interface circuit. The processing element is configured to perform steps of any method performed by the foregoing terminal. The interface circuit is configured to communicate with another apparatus. In an implementation, units for implementing the operations in the foregoing methods may be implemented in a form of a program invoked by a processing element. For example, the apparatus includes a processing element and a storage element, and the processing element invokes a program stored in the storage element, to perform the method performed by the terminal in the foregoing method embodiments. The storage element may be a storage element located on a same chip as the processing element, namely, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In another implementation, a unit in the terminal for implementing the operations in the foregoing methods may be configured as one or more processing elements. These processing elements are disposed on the signal processing part 1130. The processing element herein may be an integrated circuit, for example, one or more ASICs, one or more DSPs, one or more FPGAs, or a combination of these integrated circuits. These integrated circuits may be integrated together to form a chip.

The units for implementing the operations in the foregoing methods may be integrated together and implemented in a form of a system-on-a-chip (system-on-a-chip, SOC). The SOC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented by invoking a program by the processing element, and functions of some units may be implemented by the integrated circuit.

It can be learned that the foregoing apparatus may include at least one processing element and an interface circuit, and the at least one processing element is configured to perform any method performed by the terminal provided in the foregoing method embodiments. The processing element may perform some or all operations performed by the terminal in a first manner, that is, by invoking a program stored in the storage element; or may perform some or all operations performed by the terminal in a second manner, that is, by combining instructions and a hardware integrated logic circuit in the processor element. Certainly, some or all steps performed by the terminal may alternatively be performed by combining the first manner and the second manner.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

A person of ordinary skill in the art may understand that first, second, third, fourth, and various reference numerals in this application are merely distinguished for convenient description, and are not used to limit a scope of embodiments of this application, and also indicate a sequence. The term " and/or" describes an association relationship for describing associated objects and represents that three relationships may exist. For example, A and/or B may represent the following three cases: Only A exists, both A and B exist, and only B exists. The character "/" generally represents an "or" relationship between the associated objects. "At least one" means one or more. "At least two" means two or more. "At least one", "any one", or a similar expression thereof indicates any combination of the items, and includes a singular item or any combination of plural items. For example, at least one of a, b, or c may indicate: a, b, c, a and b, a and c, b and c, or a, b, and c, where a, b, and c may be singular or plural. The term "a plurality of means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

It may be clearly understood by a person skilled in the art that for convenient and brief description, for a detailed working process of the described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions in the embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The various illustrative logical units and circuits in embodiments of this application may implement or operate the functions via a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Operations of the methods or algorithms described in embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable magnetic disk, a CD-ROM, or a storage medium of any other form in the art. Exemplarily, the storage medium may connect to a processor so that the processor may read information from the storage medium and write information to the storage medium. Alternatively, the storage medium may be integrated into a processor. The processor and the storage medium may be disposed in the ASIC.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide operations for implementing a specified function in one or more processes in the flowcharts and/or in one or more blocks in the block diagrams.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another The storage medium may be any available medium accessible to a general-purpose or a dedicated computer.

Although this application is described with reference to specific features and embodiments thereof, it is clear that various modifications and combinations may be made to them without departing from the spirit and scope of this application. Correspondingly, the specification and accompanying drawings are merely example description of this application defined by the appended claims, and are considered as any of or all modifications, variations, combinations or equivalents that cover the scope of this application. It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication path switching method, comprising:
receiving, by a second terminal, a first message sent by a first terminal, wherein the first message comprises a first identifier, and the first identifier identifies the first terminal;
determining, by the second terminal device, a third identifier based on the first identifier, wherein the third identifier identifies the first terminal on a relay communication link that is based on the second terminal, and the second terminal is a target terminal for communication path switching of the first terminal; and
forwarding, by the second terminal based on the third identifier, a first radio resource control RRC connection reconfiguration complete message that is sent by the first terminal to a second network device, wherein the first RRC connection reconfiguration complete message indicates that the first terminal completes RRC connection reconfiguration.

2. The method according to claim 1, wherein the determining, by the second terminal, a third identifier based on the first identifier comprises:
the first identifier is the third identifier; or
allocating, by the second terminal, the third identifier based on the first identifier; or
sending, by the second terminal, the first identifier to the second network device; and
receiving, by the second terminal, third indication information sent by the second network device, wherein the third indication information comprises the third identifier and an association relationship between the first identifier and the third identifier.

3. The method according to claim 1 or 2, wherein before the receiving, by a second terminal, a first message sent by a first terminal, the method further comprises:
receiving, by the second terminal, a second message of the second network device, wherein the second message comprises configuration information of a first bearer; and
setting up, by the second terminal, the first bearer based on the second message, wherein the first bearer comprises a radio bearer for transmitting signaling and data of the first terminal between the second terminal and the first terminal, and a radio bearer for transmitting signaling and data of the first terminal between the second terminal and the second network device.

4. The method according to claim 3, wherein
the second message further comprises the first identifier

5. The method according to claim 3, wherein the second message further comprises fourth indication information, and the fourth indication information indicates that the second terminal is the target terminal for the communication path switching of the first terminal;
the second terminal allocates the third identifier based on the fourth indication information; and
the second terminal device sends the third identifier to the second network device, wherein the first identifier is the third identifier.

6. The method according to claim 3, wherein
the third identifier is carried when the second terminal forwards the first RRC connection reconfiguration complete message by using the first bearer.

7. The method according to any one of claims 1 to 6, wherein the first identifier is a local identifier local ID or a cell radio network temporary identifier C-RNTI, a 5G temporary mobile subscriber identity 5G-S-TMSI, a radio resource control transaction identifier rrc-Transactionldentifier, or an L2 ID, and the third identifier is a local ID of the first terminal.

8. A communication path switching method, comprising:
receiving, by a first terminal, a first radio resource control RRC connection reconfiguration message sent by a first network device, wherein the first RRC connection reconfiguration message comprises a first identifier, a second identifier, and first indication information, the first identifier identifies the first terminal, the first indication information indicates the first terminal to perform communication path switching, the second identifier identifies a second terminal, and the second terminal is a target terminal for the communication path switching; and
sending, by the first terminal, a first message to the second terminal, wherein the first message comprises the first identifier.

9. The method according to claim 8, wherein the method further comprises: sending, by the first terminal, a first RRC connection reconfiguration complete message to a second network device by using the second terminal.

10. The method according to claim 8 or 9, wherein before the receiving, by a first terminal, a first RRC connection reconfiguration message sent by a first network device, the method further comprises:
sending, by the first terminal, a sixth message to the first network device, wherein the sixth message comprises at least one second candidate identifier, the second candidate identifier identifies a second candidate terminal, and the second candidate terminal is a candidate target terminal for the communication path switching of the first terminal.

11. The method according to any one of claims 8 to 10, wherein the first identifier is a local ID, a C-RNTI, a 5G-S-TMSI, or rrc-TransactionIdentifier.

12. The method according to any one of claims 8 to 11, wherein the first network device and the second network device are a same network device or different network devices.

13. A communication path switching method, comprising:
receiving, by a first network device, a fifth message sent by a second network device, wherein the fifth message comprises a first RRC connection reconfiguration message, the first RRC connection reconfiguration message comprises a first identifier, a second identifier, and first indication information, the first identifier identifies a first terminal, the first indication information indicates the first terminal to perform communication path switching, the second identifier identifies a second terminal, and the second terminal is a target terminal for the communication path switching; and
sending, by the first network device, the first RRC connection reconfiguration message to the first terminal.

14. The method according to claim 13, wherein the method further comprises: receiving, by the first network device, a sixth message sent by the first terminal, wherein the sixth message comprises at least one second candidate identifier, the second candidate identifier identifies a second candidate terminal, and the second candidate terminal is a candidate target terminal for the communication path switching of the first terminal; and
determining, by the first network device, the second identifier from the at least one second candidate identifier.

15. The method according to claim 13 or 14, wherein the first identifier is a local ID, a C-RNTI, a 5G-S-TMSI, or rrc-TransactionIdentifier.

16. A communication path switching method, comprising:
receiving, by a second network device, a fourth message sent by a first network device, wherein the fourth message comprises a second identifier, the second identifier identifies a second terminal, the second terminal is a terminal within coverage of the second network device, and the fourth message is for requesting a first terminal to access the second network device through a relay service of the second terminal; and
sending, by the second network device, a fifth message to the first network device, wherein the fifth message comprises a first RRC connection reconfiguration message, the first RRC connection reconfiguration message comprises the second identifier and first indication information, a first identifier identifies the first terminal, the first indication information indicates the first terminal to perform communication path switching, the second terminal is a target terminal for the communication path switching, and the first RRC connection reconfiguration message carries the first identifier

17. The method according to claim 16, wherein before the sending, by the second network device, a fifth message to the first network device, the method further comprises:
sending, by the second network device, a second message to the second terminal, wherein the second message comprises configuration information of a first bearer; and
the configuration information of the first bearer is used by the second terminal to set up the first bearer, and the first bearer comprises a radio bearer for transmitting signaling and data of the first terminal between the second terminal and the first terminal, and a radio bearer for transmitting signaling and data of the first terminal between the second terminal and the second network device.

18. The method according to claim 17, wherein
the second message further comprises the first identifier

19. The method according to claim 17, wherein
the second message further comprises fourth indication information, and the fourth indication information indicates that the second terminal is the target terminal for the communication path switching of the first terminal; and
the second network device receives a third identifier sent by the second terminal, wherein the third identifier is allocated by the second terminal based on the fourth indication information, and the first identifier in the fifth message is the third identifier.

20. The method according to any one of claims 16 to 19, wherein
the second network device receives a first RRC connection reconfiguration complete message of the first terminal and the third identifier that are forwarded by the second terminal, wherein the third identifier identifies the first terminal on a relay communication link that is based on the second terminal, and the third identifier has an association relationship with the first identifier.

21. The method according to claim 20, wherein before the receiving, by the second network device, a first RRC connection reconfiguration complete message, the method further comprises:
receiving, by the second network device, the first identifier sent by the second terminal;
allocating, by the second network device, the third identifier based on the first identifier; and
sending, by the second network device, the association relationship between the first identifier and the third identifier to the second terminal; or
receiving, by the second network device, the association relationship between the first identifier and the third identifier, wherein the association relationship is sent by the second terminal.

22. The method according to claim 20 or 21, wherein after the receiving, by the second network device, a first RRC connection reconfiguration complete message, the method further comprises:
sending, by the second network device, a second RRC connection reconfiguration message to the second terminal, wherein the second RRC connection reconfiguration message carries the third identifier

23. The method according to any one of claims 16 to 22, wherein the first identifier is a local ID, a C-RNTI, a 5G-S-TMSI, or rrc-Transactionldentifier, and the third identifier is a local ID.

24. A communication path switching method, comprising:
receiving, by a first network device, a sixth message sent by a first terminal, wherein the sixth message comprises at least one second candidate identifier, the second candidate identifier identifies a second candidate terminal, and the second candidate terminal is a candidate target terminal for communication path switching of the first terminal; and
sending, by the first network device, a first RRC connection reconfiguration message to the first terminal, wherein the first RRC connection reconfiguration message comprises a second identifier, a first identifier, and first indication information, the first identifier identifies the first terminal, the first indication information indicates the first terminal to perform communication path switching, the second identifier identifies a second terminal, and the second terminal is a target terminal for the communication path switching of the first terminal.

25. The method according to claim 24, wherein the method further comprises: determining, by the first network device, the second identifier from the at least one second candidate identifier.

26. The method according to claim 24 or 25, wherein the method further comprises: receiving, by the first network device, a first RRC connection reconfiguration complete message that is from the first terminal and that is forwarded by the second terminal.

27. The method according to any one of claims 24 to 26, wherein before the sending, by the first network device, a first RRC connection reconfiguration message to the first terminal, the method further comprises:
sending, by the first network device, a second message to the second terminal, wherein the second message comprises configuration information of a first bearer, the configuration information of the first bearer is used by the second terminal to set up the first bearer, and the first bearer comprises a radio bearer for transmitting signaling and data of the first terminal between the second terminal and the first terminal, and a radio bearer for transmitting signaling and data of the first terminal between the second terminal and the first network device.

28. The method according to claim 27, wherein the second message further comprises the first identifier.

29. The method according to claim 27, wherein the second message further comprises fourth indication information, and the fourth indication information indicates that the second terminal is the target terminal for the communication path switching of the first terminal; and
the first network device receives a third identifier sent by the second terminal.

30. The method according to any one of claims 24 to 29, wherein before the receiving, by the first network device, a first RRC connection reconfiguration complete message, the method further comprises:
receiving, by the first network device, the first identifier sent by the second terminal;
allocating, by the first network device, the third identifier based on the first identifier; and
sending, by the first network device, an association relationship between the first identifier and the third identifier to the second terminal; or
receiving, by the first network device, an association relationship between the first identifier and the third identifier, wherein the association relationship is sent by the second terminal.

31. The method according to claim 30, wherein after the receiving, by the first network device, a first RRC connection reconfiguration complete message, the method further comprises:
sending, by the first network device, a second RRC connection reconfiguration message to the second terminal, wherein the second RRC connection reconfiguration message carries the third identifier; and
receiving, by the first network device, the third identifier sent by the second terminal.

32. The method according to any one of claims 24 to 31, wherein the first identifier is a local ID, a C-RNTI, a 5G-S-TMSI, or rrc-Transactionldentifier, the second identifier is a C-RNTI, and the third identifier is a local ID.

33. A communication apparatus, wherein the communication apparatus is a second terminal, or the communication apparatus is an apparatus configured to implement a function corresponding to the second terminal, and the apparatus comprises:
a communication unit, configured to receive a first message sent by a first terminal, wherein the first message comprises a first identifier, and the first identifier identifies the first terminal; and
a processing unit, configured to determine a third identifier based on the first identifier, wherein the third identifier identifies the first terminal on a relay communication link that is based on the second terminal, and the second terminal is a target terminal for communication path switching of the first terminal, wherein
the processing unit is further configured to forward, based on the third identifier, a first radio resource control RRC connection reconfiguration complete message that is sent by the first terminal to a second network device, wherein the first RRC connection reconfiguration complete message indicates that the first terminal completes RRC connection reconfiguration.

34. The apparatus according to claim 33, wherein the processing unit is specifically configured to determine that the first identifier is the third identifier; or
the processing unit is specifically configured to allocate the third identifier based on the first identifier; or
the communication unit is specifically configured to send the first identifier to the second network device; and
the communication unit is specifically configured to receive third indication information sent by the second network device, wherein the third indication information comprises the third identifier and an association relationship between the first identifier and the third identifier

35. The apparatus according to claim 33 or 34, wherein before the communication unit receives the first message sent by the first terminal, the communication unit is further configured to receive a second message of the second network device, wherein the second message comprises configuration information of a first bearer; and
the processing unit is configured to set up the first bearer based on the second message, wherein the first bearer comprises a radio bearer for transmitting signaling and data of the first terminal between the second terminal and the first terminal, and a radio bearer for transmitting signaling and data of the first terminal between the second terminal and the second network device.

36. The apparatus according to claim 35, wherein
the second message further comprises the first identifier

37. The apparatus according to claim 35, wherein the second message further comprises fourth indication information, and the fourth indication information indicates that the second terminal is the target terminal for the communication path switching of the first terminal;
the processing unit is configured to allocate the third identifier based on the fourth indication information; and
the communication unit is configured to send the third identifier to the second network device, wherein the first identifier is the third identifier.

38. The apparatus according to claim 35, wherein
the third identifier is carried when the communication unit forwards the first RRC connection reconfiguration complete message by using the first bearer.

39. The apparatus according to any one of claims 33 to 38, wherein the first identifier is a local identifier local ID or a cell radio network temporary identifier C-RNTI, a 5G temporary mobile subscriber identity 5G-S-TMSI, a radio resource control transaction identifier rrc-Transactionldentifier, or an L2 ID, and the third identifier is a local ID of the first terminal.

40. A communication apparatus, wherein the communication apparatus is a first terminal, or the communication apparatus is an apparatus configured to implement a function corresponding to the first terminal, and the apparatus comprises:
a communication unit, configured to receive a first radio resource control RRC connection reconfiguration message sent by a first network device, wherein the first RRC connection reconfiguration message comprises a first identifier, a second identifier, and first indication information, the first identifier identifies the first terminal, the first indication information indicates the first terminal to perform communication path switching, the second identifier identifies a second terminal, and the second terminal is a target terminal for the communication path switching, wherein
the communication unit is further configured to send a first message to the second terminal, wherein the first message comprises the first identifier

41. The apparatus according to claim 40, wherein the communication unit is further configured to send a first RRC connection reconfiguration complete message to a second network device by using the second terminal.

42. The apparatus according to claim 40 or 41, wherein the communication unit is further configured to send a sixth message to the first network device, wherein the sixth message comprises at least one second candidate identifier, the second candidate identifier identifies a second candidate terminal, and the second candidate terminal is a candidate target terminal for the communication path switching of the first terminal.

43. The apparatus according to any one of claims 40 to 42, wherein the first identifier is a local ID, a C-RNTI, a 5G-S-TMSI, or rrc-Transactionldentifier.

44. The apparatus according to any one of claims 40 to 43, wherein the first network device and the second network device are a same network device or different network devices.

45. A communication apparatus, wherein the communication apparatus is a first network device, or the communication apparatus is an apparatus configured to implement a function corresponding to the first network device, and the apparatus comprises:
a communication unit, configured to receive a fifth message sent by a second network device, wherein the fifth message comprises a first RRC connection reconfiguration message, the first RRC connection reconfiguration message comprises a first identifier, a second identifier, and first indication information, the first identifier identifies a first terminal, the first indication information indicates the first terminal to perform communication path switching, the second identifier identifies a second terminal, and the second terminal is a target terminal for the communication path switching, wherein
the communication unit is further configured to send the first RRC connection reconfiguration message to the first terminal.

46. The apparatus according to claim 45, wherein the communication unit is further configured to receive a sixth message sent by the first terminal, wherein the sixth message comprises at least one second candidate identifier, the second candidate identifier identifies a second candidate terminal, and the second candidate terminal is a candidate target terminal for the communication path switching of the first terminal; and
the apparatus further comprises a processing unit, and the processing unit is configured to determine the second identifier from the at least one second candidate identifier.

47. The apparatus according to claim 45 or 46, wherein the first identifier is a local ID, a C-RNTI, a 5G-S-TMSI, or rrc-Transactionldentifier.

48. A communication apparatus, wherein the communication apparatus is a second network device, or the communication apparatus is an apparatus configured to implement a function corresponding to the second network device, and the apparatus comprises:
a communication unit, configured to receive a fourth message sent by a first network device, wherein the fourth message comprises a second identifier, the second identifier identifies a second terminal, the second terminal is a terminal within coverage of the second network device, and the fourth message is for requesting a first terminal to access the second network device through a relay service of the second terminal; and
the communication unit is further configured to send a fifth message to the first network device, wherein the fifth message comprises a first RRC connection reconfiguration message, the first RRC connection reconfiguration message comprises the second identifier and first indication information, a first identifier identifies the first terminal, the first indication information indicates the first terminal to perform communication path switching, the second terminal is a target terminal for the communication path switching, and the first RRC connection reconfiguration message carries the first identifier.

49. The apparatus according to claim 48, wherein the communication unit is further configured to send a second message to the second terminal, wherein the second message comprises configuration information of a first bearer; and
the configuration information of the first bearer is used by the second terminal to set up the first bearer, and the first bearer comprises a radio bearer for transmitting signaling and data of the first terminal between the second terminal and the first terminal, and a radio bearer for transmitting signaling and data of the first terminal between the second terminal and the second network device.

50. The apparatus according to claim 49, wherein
the second message further comprises the first identifier.

51. The apparatus according to claim 49, wherein
the second message further comprises fourth indication information, and the fourth indication information indicates that the second terminal is the target terminal for the communication path switching of the first terminal; and
the communication unit is further configured to receive a third identifier sent by the second terminal, wherein the third identifier is allocated by the second terminal based on the fourth indication information, and the first identifier in the fifth message is the third identifier

52. The apparatus according to any one of claims 48 to 51, wherein
the communication unit is further configured to receive a first RRC connection reconfiguration complete message of the first terminal and the third identifier that are forwarded by the second terminal, wherein the third identifier identifies the first terminal on a relay communication link that is based on the second terminal, and the third identifier has an association relationship with the first identifier.

53. The apparatus according to claim 52, wherein the apparatus further comprises a processing unit;
the communication unit is further configured to receive the first identifier sent by the second terminal;
the processing unit is configured to allocate the third identifier based on the first identifier; and
the communication unit is further configured to send the association relationship between the first identifier and the third identifier to the second terminal; or
the communication unit is further configured to receive the association relationship between the first identifier and the third identifier, wherein the association relationship is sent by the second terminal.

54. The apparatus according to claim 52 or 53, wherein the communication unit is further configured to send a second RRC connection reconfiguration message to the second terminal, wherein the second RRC connection reconfiguration message carries the third identifier

55. The apparatus according to any one of claims 48 to 54, wherein the first identifier is a local ID, a C-RNTI, a 5G-S-TMSI, or rrc-Transactionldentifier, and the third identifier is a local ID.

56. A communication apparatus, wherein the communication apparatus is a first network device, or the communication apparatus is an apparatus configured to implement a function corresponding to the first network device, and the apparatus comprises:
a communication unit, configured to receive a sixth message sent by a first terminal, wherein the sixth message comprises at least one second candidate identifier, the second candidate identifier identifies a second candidate terminal, and the second candidate terminal is a candidate target terminal for communication path switching of the first terminal; and
the communication unit is further configured to send a first RRC connection reconfiguration message to the first terminal, wherein the first RRC connection reconfiguration message comprises a second identifier, a first identifier, and first indication information, the first identifier identifies the first terminal, the first indication information indicates the first terminal to perform communication path switching, the second identifier identifies a second terminal, and the second terminal is a target terminal for the communication path switching of the first terminal.

57. The apparatus according to claim 56, wherein the apparatus further comprises a processing unit and the processing unit is configured to determine the second identifier from the at least one second candidate identifier.

58. The apparatus according to claim 56 or 57, wherein the communication unit is further configured to receive a first RRC connection reconfiguration complete message that is from the first terminal and that is forwarded by the second terminal.

59. The apparatus according to any one of claims 56 to 58, wherein the communication unit is further configured to send a second message to the second terminal, wherein the second message comprises configuration information of a first bearer, the configuration information of the first bearer is used by the second terminal to set up the first bearer, and the first bearer comprises a radio bearer for transmitting signaling and data of the first terminal between the second terminal and the first terminal, and a radio bearer for transmitting signaling and data of the first terminal between the second terminal and the first network device.

60. The apparatus according to claim 59, wherein the second message further comprises the first identifier.

61. The apparatus according to claim 59, wherein the second message further comprises fourth indication information, and the fourth indication information indicates that the second terminal is the target terminal for the communication path switching of the first terminal;
the communication unit is further configured to receive the third identifier sent by the second terminal.

62. The apparatus according to any one of claims 56 to 61, wherein
the communication unit is further configured to receive the first identifier sent by the second terminal;
the processing unit is configured to allocate the third identifier based on the first identifier; and
the communication unit is further configured to send an association relationship between the first identifier and the third identifier to the second terminal; or
the communication unit is further configured to receive an association relationship between the first identifier and the third identifier, wherein the association relationship is sent by the second terminal.

63. The apparatus according to claim 62, wherein the communication unit is further configured to send a second RRC connection reconfiguration message to the second terminal, wherein the second RRC connection reconfiguration message carries the third identifier
the communication unit is further configured to receive the third identifier sent by the second terminal.

64. The apparatus according to any one of claims 56 to 63, wherein the first identifier is a local ID, a C-RNTI, a 5G-S-TMSI, or rrc-Transactionldentifier, the second identifier is a C-RNTI, and the third identifier is a local ID.

65. A communication apparatus, comprising a processor, wherein the processor is coupled to a memory, and the memory is configured to store a program or instructions; and when the program or the instructions are executed by the processor, the apparatus is enabled to perform the method according to any one of claims 1 to 7 or the method according to any one of claims 8 to 12.

66. A communication apparatus, comprising a processor, wherein the processor is coupled to a memory, and the memory is configured to store a program or instructions; and when the program or the instructions are executed by the processor, the apparatus is enabled to perform the method according to any one of claims 13 to 15, the method according to any one of claims 16 to 23, or the method according to any one of claims 24 to 32.

67. A computer-readable storage medium, wherein the computer-readable storage medium stores a computer program or instructions, and when the computer program or the instructions are executed, a computer is enabled to perform the method according to any one of claims 1 to 32.

68. A communication system, comprising the apparatus according to claim 65 and/or the apparatus according to claim 66.

69. A computer program product, wherein the computer program product comprises a computer program, and when the computer program is run on a computer, the computer is enabled to perform the method according to any one of claims 1 to 32.
